(19) Europäisches Patentamt
European Patent Office
Office européen des brevets

(11) **EP 3 809 159 A1**

(12) **EUROPEAN PATENT APPLICATION**
published in accordance with Art. 153(4) EPC

(43) Date of publication:
**21.04.2021 Bulletin 2021/16**

(51) Int Cl.:
***G01S 13/52*** $^{(2006.01)}$

(21) Application number: **19932236.3**

(22) Date of filing: **04.07.2019**

(86) International application number:
**PCT/CN2019/094663**

(87) International publication number:
**WO 2021/000313 (07.01.2021 Gazette 2021/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SZ DJI Technology Co., Ltd.**
**Shenzhen, Guangdong 518057 (CN)**

(72) Inventors:
• **LU, Xinfei**
**Shenzhen City, Guangdong 518057 (CN)**
• **BU, Yuncheng**
**Shenzhen City, Guangdong 518057 (CN)**
• **LI, Yiqiang**
**Shenzhen City, Guangdong 518057 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **METHODS OF USING LATERAL MILLIMETER WAVE RADAR TO DETECT LATERAL STATIONARY OBJECT AND MEASURE MOVING SPEED**

(57)   This application provides a lateral stationary object detection method and a moving speed detection method based on a lateral millimeter wave radar, the lateral millimeter wave radar is mounted on a lateral side of a mobile platform, the lateral stationary object detection method based thereon includes: obtaining an echo signal of the lateral millimeter wave radar, and generating detection data based on the echo signal; determining, from the detection data, arc target points conforming to arc distribution; and determining location information of a lateral stationary object based on the arc target points. In this application, a location of the lateral stationary object may be detected based on arc distribution characteristics exhibited by the target points of the lateral stationary object as measured by the lateral millimeter wave radar. This satisfies a requirement for detecting the lateral stationary object by the lateral millimeter wave radar, and provides a technical means for determining a movable area by the mobile platform equipped with the lateral millimeter wave radar, thereby improving accuracy of determining the movable area by the mobile platform, and improving safety of driving.

```
            ┌─────────┐
            │  Start  │
            └────┬────┘
                 ▼
  ┌────────────────────────────────────┐
  │ Obtain an echo signal of a lateral │
  │ millimeter wave radar, and generate │──── S102
  │ detection data based on the echo    │
  │ signal                              │
  └──────────────┬─────────────────────┘
                 ▼                          S104
  ┌────────────────────────────────────┐
  │ Determine, from the detection data, │
  │ arc target points conforming to an  │
  │ arc distribution                    │
  └──────────────┬─────────────────────┘
                 ▼                          S106
  ┌────────────────────────────────────┐
  │ Determine location information of a │
  │ lateral stationary object based on  │
  │ the arc target points               │
  └──────────────┬─────────────────────┘
                 ▼
            ┌─────────┐
            │   End   │
            └─────────┘
```

FIG. 1

EP 3 809 159 A1

## Description

TECHNICAL FIELD

This application relates to the technical field of vehicle-mounted radars, and specifically, to a lateral stationary object detection method based on a lateral millimeter wave radar, a moving speed detection method based on a lateral millimeter wave radar, two lateral millimeter wave radars, two mobile platforms, and one computer-readable storage medium.

BACKGROUND

In recent years, the millimeter wave radar has become one of important sensors in the field of assisted driving and self-driving thanks to its advantages such as all time, all weather, and high accuracy in speed measurement. Currently, a common solution for mounting a millimeter wave radar is a 1+2 solution or a 1+4 solution, that is, one millimeter wave radar at the front of a vehicle plus two or four corner radars. However, the foregoing solutions can hardly completely cover lateral areas of the vehicle. Since the lateral areas of the vehicle are close to the vehicle and are more prone to accidents such as scratches and collisions, the lateral areas of the vehicle are always the focus areas. A conventional lidar has poor performance in estimating a target speed in a lateral area, and cannot accurately predict the driving status of a lateral vehicle, and therefore is prone to accidents and can hardly satisfy an actual application requirement. As a new mounting solution, a lateral millimeter wave radar can cover an accident-prone area on one side of a vehicle body. The lateral millimeter wave radar is superior to the lidar in terms of both cost and safety, and therefore tends to replace a lateral lidar. However, for a side mounted millimeter wave radar, data processing modes for conventional front-mounted and rear-mounted radars are no longer applicable, and cannot fully satisfy growing requirements of the side-mounted millimeter wave radar.

SUMMARY

An objective of this application is to resolve at least one of technical problems that exist in the prior art or related art.

Therefore, a first aspect of this application provides a lateral stationary object detection method based on a lateral millimeter wave radar.

A second aspect of this application provides a moving speed detection method based on a lateral millimeter wave radar.

A third aspect of this application provides a lateral millimeter wave radar.

A fourth aspect of this application provides a lateral millimeter wave radar.

A fifth aspect of this application provides a mobile platform.

A sixth aspect of this application provides a mobile platform.

A seventh aspect of this application provides a computer-readable storage medium.

In view of this, the first aspect of this application provides a lateral stationary object detection method based on a lateral millimeter wave radar, where the lateral millimeter wave radar is mounted on a side of a mobile platform, and the lateral stationary object detection method based on the lateral millimeter wave radar includes: obtaining an echo signal of the lateral millimeter wave radar, and generating detection data based on the echo signal; determining, from the detection data, arc target points conforming to an arc distribution; and determining location information of a lateral stationary object based on the arc target points.

In addition, the lateral stationary object detection method based on the lateral millimeter wave radar in the foregoing technical solution provided according to this application may further have the following additional technical features:

In the foregoing technical solution, preferably, the determining, in the detection data, arc target points conforming to arc distribution includes: determining the arc target points based on a moving speed of the mobile platform and the detection data.

In any one of the foregoing technical solutions, preferably, the detection data includes reflection intensity, relative distances and relative speeds, and the determining of the arc target points based on the moving speed of the mobile platform and the detection data includes: determining, from the detection data, valid target points whose reflection intensity is greater than a threshold; and determining the arc target points based on the moving speed, and relative distances and relative speeds of the valid target points.

In any one of the foregoing technical solutions, preferably, the determining of the arc target points based on the moving speed, and the relative distances and the relative speeds of the valid target points includes: determining, from the valid target points, screened target points whose relative speeds are less than the moving speed; calculating lateral distances based on the moving speed, and relative distances and relative speeds of the screened target points; and determining the arc target points based on the lateral distances of the screened target points.

In any one of the foregoing technical solutions, preferably, the determining of the arc target points based on the lateral distances of the screened target points includes: presetting a plurality of continuous reference lateral distance intervals, and associating, based on how the lateral distances of the screened target points fall within one of the reference lateral distance intervals, corresponding screened target points with the one of the reference lateral distance intervals; counting a quantity of screened target points associated with each reference lateral distance interval, and marking the quantity as a target quantity; and marking, based on whether the target quantity is greater than a preset quantity, the corresponding screened target points associated with the one of the reference lateral distance intervals as the arc target points.

In any one of the foregoing technical solutions, preferably, the determining of the location information of the lateral stationary object based on the arc target points includes: for each screened target point, calculating a longitudinal distance based on the moving speed, and a relative distance and a relative speed corresponding to the screened target point, and obtaining a lateral distance and a longitudinal distance corresponding to one of the arc target points as location information corresponding to the one of the arc target points; or for each arc target point, calculating a longitudinal distance based on the moving speed, and a relative distance and a relative speed corresponding to the arc target point, and using a lateral distance and the longitudinal distance corresponding to the arc target point as location information corresponding to the arc target point.

In any one of the foregoing technical solutions, preferably, a length of each reference lateral distance interval is equal, and is related to accuracy of the lateral millimeter wave radar.

In any one of the foregoing technical solutions, preferably, the length of each reference lateral distance interval is not greater than 0.5 meter.

In any one of the foregoing technical solutions, preferably, the preset quantity is related to a quantity of radar signals transmitted by the lateral millimeter wave radar.

In any one of the foregoing technical solutions, preferably, the preset quantity is greater than or equal to 10.

In any one of the foregoing technical solutions, preferably, the radar signals transmitted by the lateral millimeter wave radar are fast swept frequency modulated continuous wave signals.

In any one of the foregoing technical solutions, preferably, the detection data further includes relative angles, and the lateral stationary object detection method based on the lateral millimeter wave radar further includes: marking relative angles and relative distances corresponding to other target points than the arc target points as location information corresponding to the other target points.

The second aspect of this application provides a moving speed detection method based on a lateral millimeter wave radar, where the lateral millimeter wave radar is mounted on a side of a mobile platform, and the moving speed detection method based on the lateral millimeter wave radar includes: obtaining an echo signal of the lateral millimeter wave radar, and generating detection data based on the echo signal; determining, from the detection data, arc target points conforming to an arc distribution; and determining a moving speed of the mobile platform based on the arc target points.

In addition, the moving speed detection method based on the lateral millimeter wave radar in the foregoing technical solution provided according to this application may further have the following additional technical features:

In the foregoing technical solution, preferably, the determining, from the detection data, of the arc target points conforming to the arc distribution includes: determining a reference target point and a plurality of calculated target points from the detection data; determining real speeds of the plurality of calculated target points based on the reference target point; and determining the arc target points based on the real speeds.

In any one of the foregoing technical solutions, preferably, the detection data includes relative distances and relative speeds, a relative distance corresponding to the reference target point is less than a relative distance corresponding to any one of the calculated target points, and an absolute value of a relative speed corresponding to the reference target point is less than a preset value.

In any one of the foregoing technical solutions, preferably, the determining of the real speeds of the calculated target points based on the reference target point includes: determining angular relationships between the reference target point, the plurality of calculated target points, and a signal transmission point based on the relative distance corresponding to the reference target point and relative distances corresponding to the plurality of calculated target points; and determining the real speeds of the plurality of calculated target points based on the angular relationships and relative speeds of the plurality of calculated target points, wherein the relative speeds are components of the real speeds in a forward direction of the mobile platform.

In any one of the foregoing technical solutions, preferably, the determining of the arc target points based on the real speeds includes: determining round-down values of the real speeds of the plurality of the calculated target points; counting quantities of the round-down values; and marking the calculated target points corresponding to a largest quantity of the round-down values as the arc target points.

In any one of the foregoing technical solutions, preferably, the moving speed is an average of the real speeds of the arc target points.

In any one of the foregoing technical solutions, preferably, the detection data includes reflection intensity, and the determining one reference target point and a plurality of calculated target points in the detection data includes: determining, in the detection data, valid target points whose reflection intensity is greater than a threshold; and determining the one reference target point and the plurality of calculated target points among the valid target points.

The third aspect of this application provides a lateral millimeter wave radar mounted on a side of a mobile platform, where the lateral millimeter wave radar includes a signal transmitter configured to transmit radar signals, a signal receiver configured to receive echo signals, a memory configured to store a computer instruction, and a processor, where the processor is configured to execute the computer instruction to implement the following: obtaining the echo signals, and generating detection data based on the echo signals; determining, in the detection data, arc target points conforming to arc distribution; and determining location information of a lateral stationary object based on the arc target points.

In addition, the lateral millimeter wave radar in the foregoing technical solution provided according to this application may further have the following additional technical features:

In the foregoing technical solution, preferably, the determining, in the detection data, arc target points conforming to arc distribution, which is implemented when the processor executes the computer instruction, includes: determining the arc target points based on a moving speed of the mobile platform and the detection data.

In any one of the foregoing technical solutions, preferably, the detection data includes reflection intensity, relative distances, and relative speeds, and the determining the arc target points based on a moving speed of the mobile platform and the detection data, which is implemented when the processor executes the computer instruction, includes: determining, in the detection data, valid target points whose reflection intensity is greater than a threshold; and determining the arc target points based on the moving speed, and relative distances and relative speeds of the valid target points.

In any one of the foregoing technical solutions, preferably, the determining the arc target points based on the moving speed, and relative distances and relative speeds of the valid target points, which is implemented when the processor executes the computer instruction, includes: determining, among the valid target points, screened target points whose relative speeds are less than the moving speed; calculating lateral distances based on the moving speed, and relative distances and the relative speeds of the screened target points; and determining the arc target points based on the lateral distances of the screened target points.

In any one of the foregoing technical solutions, preferably, the determining the arc target points based on the lateral distances of the screened target points, which is implemented when the processor executes the computer instruction, includes: presetting a plurality of continuous reference lateral distance intervals, and associating, based on a case that the lateral distances of the screened target points fall within one of the reference lateral distance intervals, the corresponding screened target points with the reference lateral distance interval; counting a quantity of screened target points associated with each reference lateral distance interval, and marking the quantity as a target quantity; and marking, based on a case that the target quantity is greater than a preset quantity, the corresponding screened target points associated with the reference lateral distance interval as the arc target points.

In any one of the foregoing technical solutions, preferably, the determining location information of a lateral stationary object based on the arc target points, which is implemented when the processor executes the computer instruction, includes: for each screened target point, calculating a longitudinal distance based on the moving speed, and a relative distance and a relative speed corresponding to the screened target point, and obtaining a lateral distance and a longitudinal distance corresponding to the arc target point as location information corresponding to the arc target point; or

in any one of the foregoing technical solutions, preferably, for each arc target point, calculating a longitudinal distance based on the moving speed, and a relative distance and a relative speed corresponding to the arc target point, and using a lateral distance and the longitudinal distance corresponding to the arc target point as location information corresponding to the arc target point.

In any one of the foregoing technical solutions, preferably, a length of each reference lateral distance interval is equal, and is related to accuracy of the lateral millimeter wave radar.

In any one of the foregoing technical solutions, preferably, the length of each reference lateral distance interval is not greater than 0.5 meter.

In any one of the foregoing technical solutions, preferably, the preset quantity is related to a quantity of radar signals transmitted by the lateral millimeter wave radar.

In any one of the foregoing technical solutions, preferably, the preset quantity is greater than or equal to 10.

In any one of the foregoing technical solutions, preferably, the radar signals transmitted by the lateral millimeter wave radar are fast swept frequency modulated continuous wave signals.

In any one of the foregoing technical solutions, preferably, the detection data further includes relative angles, and when the processor executes the computer instruction, the following is further implemented: marking relative angles and relative distances corresponding to other target points than the arc target point as location information corresponding to the other target points.

The fourth aspect of this application provides a lateral millimeter wave radar mounted on a side of a mobile platform, where the lateral millimeter wave radar includes a signal transmitter configured to transmit radar signals, a signal receiver configured to receive echo signals, a memory configured to store a computer instruction, and a processor, where the processor is configured to execute the computer instruction to implement the following: obtaining the echo signals, and generating detection data based on the echo signals; determining, in the detection data, arc target points conforming to arc distribution; and determining a moving speed of the mobile platform based on the arc target points.

In addition, the lateral millimeter wave radar in the foregoing technical solution provided according to this application may further have the following additional technical features:

In the foregoing technical solution, preferably, the determining, in the detection data, arc target points conforming to arc distribution, which is implemented when the processor executes the computer instruction, includes: determining one reference target point and a plurality of calculated target points in the detection data; determining real speeds of the calculated target points based on the reference target point; and determining the arc target points based on the real speeds.

In any one of the foregoing technical solutions, preferably, the detection data includes relative distances and relative speeds, a relative distance corresponding to the reference target point is less than a relative distance corresponding to any one of the calculated target points, and an absolute value of a relative speed corresponding to the reference target point is less than a preset value.

In any one of the foregoing technical solutions, preferably, the determining real speeds of the calculated target points based on the reference target point, which is implemented when the processor executes the computer instruction, includes: determining angular relationships between the reference target point, the calculated target points, and a signal transmission point by using the relative distance corresponding to the reference target point and relative distances corresponding to the calculated target points; and determining the real speeds of the calculated target points by using the angular relationships and relative speeds of the calculated target points, where the relative speeds are components of the real speeds in a forward direction of the mobile platform.

In any one of the foregoing technical solutions, preferably, the determining the arc target points based on the real speeds, which is implemented when the processor executes the computer instruction, includes: determining round-down values of the real speeds of all the calculated target points; counting quantities of the round-down values; and marking the calculated target points corresponding to a largest quantity of round-down values as the arc target points.

In any one of the foregoing technical solutions, preferably, the moving speed is an average value of the real speeds of all the arc target points.

In any one of the foregoing technical solutions, preferably, the detection data includes reflection intensity, and the determining one reference target point and a plurality of calculated target points in the detection data, which is implemented when the processor executes the computer instruction, includes: determining, in the detection data, valid target points whose reflection intensity is greater than a threshold; and determining the one reference target point and the plurality of calculated target points among the valid target points.

The fifth aspect of this application provides a mobile platform, where the mobile platform includes a lateral millimeter wave radar configured to transmit radar signals and receive echo signals, a memory configured to store a computer instruction, and a processor, where the processor is configured to execute the computer instruction to implement the following: obtaining the echo signals, and generating detection data based on the echo signals; determining, in the detection data, arc target points conforming to arc distribution; and determining location information of a lateral stationary object based on the arc target points.

In addition, the mobile platform in the foregoing technical solution provided according to this application may further have the following additional technical features:

In the foregoing technical solution, preferably, the determining, in the detection data, arc target points conforming to arc distribution, which is implemented when the processor executes the computer instruction, includes: determining the arc target points based on a moving speed of the mobile platform and the detection data.

In any one of the foregoing technical solutions, preferably, the detection data includes reflection intensity, relative distances, and relative speeds, and the determining the arc target points based on a moving speed of the mobile platform and the detection data, which is implemented when the processor executes the computer instruction, includes: determining, in the detection data, valid target points whose reflection intensity is greater than a threshold; and determining the arc target points based on the moving speed, and relative distances and relative speeds of the valid target points.

In any one of the foregoing technical solutions, preferably, the determining the arc target points based on the moving speed, and relative distances and relative speeds of the valid target points, which is implemented when the processor executes the computer instruction, includes: determining, among the valid target points, screened target points whose relative speeds are less than the moving speed; calculating lateral distances based on the moving speed, and relative distances and the relative speeds of the screened target points; and determining the arc target points based on the lateral distances of the screened target points.

In any one of the foregoing technical solutions, preferably, the determining the arc target points based on the lateral distances of the screened target points, which is implemented when the processor executes the computer instruction, includes: presetting a plurality of continuous reference lateral distance intervals, and associating, based on a case that the lateral distances of the screened target points fall within one of the reference lateral distance intervals, the corresponding screened target points with the reference lateral distance interval; counting a quantity of screened target points associated with each reference lateral distance interval, and marking the quantity as a target quantity; and marking, based on a case that the target quantity is greater than a preset quantity, the corresponding screened target points associated with the reference lateral distance interval as the arc target points.

In any one of the foregoing technical solutions, preferably, the determining location information of a lateral stationary object based on the arc target points, which is implemented when the processor executes the computer instruction, includes: for each screened target point, calculating a longitudinal distance based on the moving speed, and a relative distance and a relative speed corresponding to the screened target point, and obtaining a lateral distance and a longitudinal distance corresponding to the arc target point as location information corresponding to the arc target point; or

in any one of the foregoing technical solutions, preferably, for each arc target point, calculating a longitudinal distance based on the moving speed, and a relative distance and a relative speed corresponding to the arc target point, and using a lateral distance and the longitudinal distance corresponding to the arc target point as location information corresponding to the arc target point.

In any one of the foregoing technical solutions, preferably, a length of each reference lateral distance interval is equal, and is related to accuracy of the lateral millimeter wave radar.

In any one of the foregoing technical solutions, preferably, the length of each reference lateral distance interval is not greater than 0.5 meter.

In any one of the foregoing technical solutions, preferably, the preset quantity is related to a quantity of radar signals transmitted by the lateral millimeter wave radar.

In any one of the foregoing technical solutions, preferably, the preset quantity is greater than or equal to 10.

In any one of the foregoing technical solutions, preferably, the radar signals transmitted by the lateral millimeter wave radar are fast swept frequency modulated continuous wave signals.

In any one of the foregoing technical solutions, preferably, the detection data further includes relative angles, and when the processor executes the computer instruction, the following is further implemented: marking relative angles and relative distances corresponding to other target points than the arc target point as location information corresponding to the other target points.

The sixth aspect of this application provides a mobile platform, where the mobile platform includes a lateral millimeter wave radar configured to transmit radar signals and receive echo signals, a memory configured to store a computer instruction, and a processor, where the processor is configured to execute the computer instruction to implement the following: obtaining the echo signals, and generating detection data based on the echo signals; determining, in the detection data, arc target points conforming to arc distribution; and determining a moving speed of the mobile platform based on the arc target points.

In addition, the mobile platform in the foregoing technical solution provided according to this application may further have the following additional technical features:

In the foregoing technical solution, preferably, the determining, in the detection data, arc target points conforming to arc distribution, which is implemented when the processor executes the computer instruction, includes: determining one reference target point and a plurality of calculated target points in the detection data; determining real speeds of the calculated target points based on the reference target point; and determining the arc target points based on the real speeds.

In any one of the foregoing technical solutions, preferably, the detection data includes relative distances and relative speeds, a relative distance corresponding to the reference target point is less than a relative distance corresponding to any one of the calculated target points, and an absolute value of a relative speed corresponding to the reference target point is less than a preset value.

In any one of the foregoing technical solutions, preferably, the determining real speeds of the calculated target points based on the reference target point, which is implemented when the processor executes the computer instruction, includes: determining angular relationships between the reference target point, the calculated target points, and a signal transmission point by using the relative distance corresponding to the reference target point and relative distances corresponding to the calculated target points; and determining the real speeds of the calculated target points by using the angular relationships and relative speeds of the calculated target points, where the relative speeds are components of the real speeds in a forward direction of the mobile platform.

In any one of the foregoing technical solutions, preferably, the determining the arc target points based on the real speeds, which is implemented when the processor executes the computer instruction, includes: determining round-down values of the real speeds of all the calculated target points; counting quantities of the round-down values; and marking the calculated target points corresponding to a largest quantity of round-down values as the arc target points.

In any one of the foregoing technical solutions, preferably, the moving speed is an average value of the real speeds of all the arc target points.

In any one of the foregoing technical solutions, preferably, the detection data includes reflection intensity, and the determining one reference target point and a plurality of calculated target points in the detection data, which is implemented when the processor executes the computer instruction, includes: determining, in the detection data, valid target points whose reflection intensity is greater than a threshold; and determining the one reference target point and the plurality of calculated target points among the valid target points.

The seventh aspect of this application provides a computer-readable storage medium, where the computer-readable storage medium stores a computer program, and when the computer program is executed by a processor, steps of the lateral stationary object detection method based on the lateral millimeter wave radar according to any one of the foregoing technical solutions are implemented, or steps of the moving speed detection method based on the lateral millimeter wave radar according to any one of the foregoing technical solutions are implemented.

This application provides a lateral stationary object detection solution based on a lateral millimeter wave radar. Through analysis, it is found that relative distances and relative speeds of a lateral stationary object measured by the lateral millimeter wave radar present arc distribution characteristics. Detection data of a plurality of target points may be obtained by analyzing echo signals of the lateral millimeter wave radar. The target points are traversed, and target points conforming to the arc distribution may be screened by using relative speeds and relative distances detected by the lateral millimeter wave radar and a moving speed of a mobile platform and are marked as arc target points. In this case, it may be considered that the arc target points belong to the lateral stationary object. Finally, location information of the arc target points is obtained, and the lateral stationary object can be detected accurately. This application provides a method for estimating a location of a lateral stationary object by using a new signal processing method based on the lateral millimeter wave radar, to avoid a problem of a large deviation of lateral stationary object location estimation caused by poor angle measurement performance of the lateral millimeter wave radar. The method satisfies a requirement of the lateral millimeter wave radar for detecting the lateral stationary object, and provides a technical means for determining a movable area by the mobile platform equipped with the lateral millimeter wave radar, thereby improving accuracy of determining the movable area by the mobile platform and improving safety of driving.

This application further provides a moving speed detection solution based on a lateral millimeter wave radar, which may use a geostationary object to calculate a moving speed of a mobile platform. Through analysis, it is found that when the lateral millimeter wave radar is used to transmit radar signals, relative distances and relative speeds of a stationary object on a side of the mobile platform present arc distribution characteristics. In an embodiment of this application, detection data may be obtained by analyzing echo signals of the lateral millimeter wave radar, and then target points conforming to the arc distribution are found and marked as arc target points, and the arc target points are scattering points of the stationary object on the side of the mobile platform. Because angles of different arc target points on the same object relative to the mobile platform are different, there are differences between relative speeds observed by the lateral millimeter wave radar. The moving speed of the mobile platform may be estimated by using the arc target points. In this application, based on a lateral millimeter wave radar mounting solution, the moving speed of the mobile platform may be obtained by using a unique feature of the lateral millimeter wave radar and a signal processing mode. This resolves a fault problem caused by an inability to obtain the moving speed of the mobile platform by the lateral millimeter wave radar, and avoids a target moving state estimation error caused by the inability to obtain the moving speed of the mobile platform, which may otherwise affect a decision and control of the mobile platform based on the lateral millimeter wave radar.

The additional aspects and advantages of this application will become apparent in the following description, or be understood through practice of this application.

BRIEF DESCRIPTION OF THE DRAWINGS

The foregoing and/or additional aspects and advantages of this application will become more apparent and comprehensible with the description of the embodiments in combination with the accompanying drawings.

FIG. 1 is a schematic flowchart of a lateral stationary object detection method based on a lateral millimeter wave radar according to an embodiment of this application;
FIG. 2 is a schematic diagram of fence target point detection by a lateral millimeter wave radar according to an embodiment of this application;
FIG. 3 is a distance-speed energy graph of fence target point detection by a lateral millimeter wave radar according to an embodiment of this application;
FIG. 4 is a schematic diagram of changes in reflected strength with relative distances and relative speeds of fence target point detection by a lateral millimeter wave radar according to an embodiment of this application;
FIG. 5 is a schematic flowchart of a moving speed detection method based on a lateral millimeter wave radar according to an embodiment of this application;
FIG. 6 is a schematic diagram of speed measurement and distance measurement by a lateral millimeter wave radar according to an embodiment of this application;
FIG. 7 is a distribution diagram of target points with relative distances and relative speeds detected by a lateral millimeter wave radar according to an embodiment of this application;
FIG. 8 is a schematic structural diagram of a lateral millimeter wave radar according to an embodiment of this application;
FIG. 9 is a schematic structural diagram of a lateral millimeter wave radar according to another embodiment of this application;
FIG. 10 is a schematic structural diagram of a mobile platform according to an embodiment of this application; and

FIG. 11 is a schematic structural diagram of a mobile platform according to another embodiment of this application.

DETAILED DESCRIPTION

In order to allow more clear understanding of the objects, features and advantages of this application, the following further describes this application in detail with reference to accompanying drawings and specific embodiments. It should be noted that under a condition that no conflict occurs, the embodiments of this application and features in the embodiments may be combined with each other.

Many specific details are described in the following description for fully understanding this application. However, this application may be further implemented in other manners different from the one described herein. Therefore, the scope of protection of this application is not limited by the specific embodiments disclosed below.

According to a first aspect of this application, an embodiment provides a lateral stationary object detection method based on a lateral millimeter wave radar, where the lateral millimeter wave radar is mounted on a lateral side of a mobile platform (for example, a vehicle, or an unmanned aircraft). The lateral millimeter wave radar may cover an accident-prone area on one lateral side of the mobile platform. The lateral millimeter wave radar may determine its own moving area by accurately measuring a lateral stationary object (for example, a fence), to avoid a collision. In a conventional lateral stationary object detection method, information such as the relative distance, relative speed and reflection intensity of a target may be obtained through processing, and angle information of the target may also be obtained by using a multichannel angle measurement algorithm, so that location information of a lateral stationary object can be obtained. However, for a lateral millimeter wave radar, due to its wide beam coverage, angle measurement performance of the lateral millimeter wave radar is reduced. In addition, in a complex road environment, a large quantity of multipath signals may be formed through multiple reflections. This may severely affect the angle measurement performance of the lateral millimeter wave radar. Thus, the performance in obtaining a location of a lateral stationary object by using an angle measurement solution may be undesirable.

The following describes an embodiment of this application in detail by using a vehicle as an example.

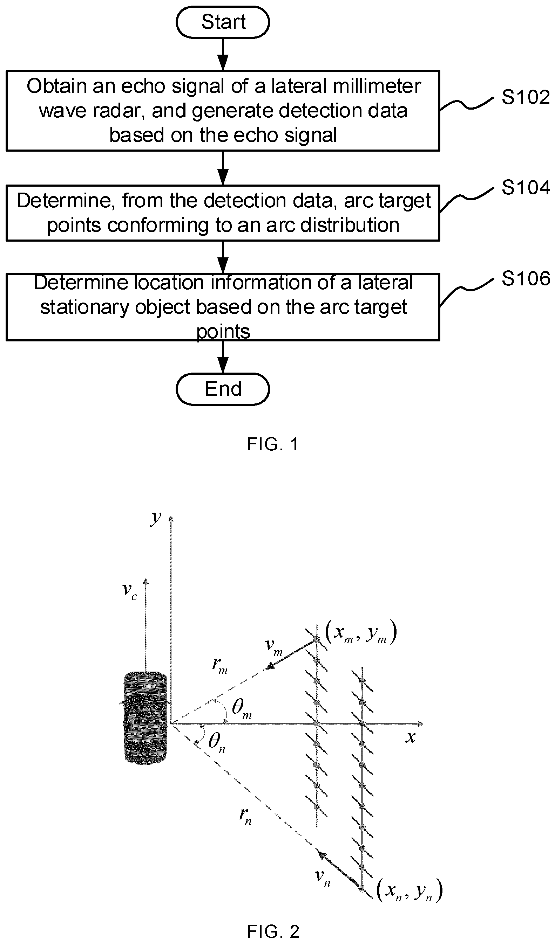

FIG. 1 is a schematic flowchart of a lateral stationary object detection method based on a lateral millimeter wave radar according to an embodiment of this application.

As shown in FIG. 1, the lateral stationary object detection method based on the lateral millimeter wave radar may include the following steps.

S102. Obtain an echo signal from a lateral millimeter wave radar, and generate detection data based on the echo signal.

S104. Determine, from the detection data, arc target points conforming to an arc distribution.

S106. Determine location information of a lateral stationary object based on the arc target points.

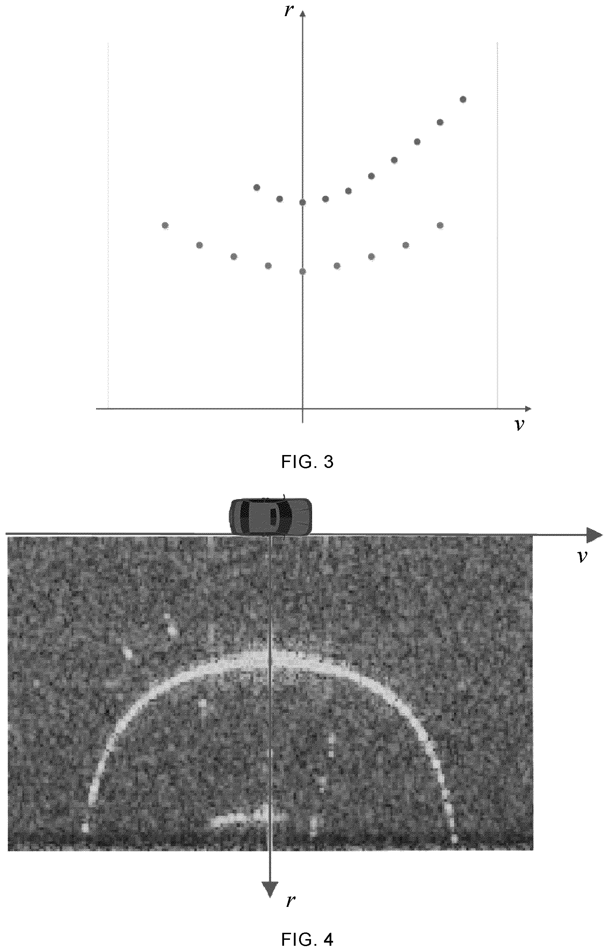

In the lateral stationary object detection method based on the lateral millimeter wave radar according to this embodiment of this application, it is found through analysis that when the lateral millimeter wave radar is used to transmit radar signals, for fences in different lateral positions as shown in FIG. 2, that is, lateral stationary objects, the distribution of the fences in a distance-speed energy graph exhibits arc distribution characteristics, as shown in FIG. 3. The arc herein may include a circular arc, but may also include other non-circular arc shapes. For example, in the case where a lateral stationary object is completely straight, and a vehicle drives along a straight line parallel to the lateral stationary object, and both a mounting error and a detection error of the lateral millimeter wave radar are very small, target points should exhibit a circular arc shape in the distance-speed energy graph. When an environmental condition, a driving condition, or other condition has errors, the target points may exhibit a general arc shape. Assuming that a speed of the vehicle is $v_c$, the lateral millimeter wave radar measures a relative angle $\theta$ (that is, an angle between a connection line between the fence target point and a signal transmission point of the lateral millimeter wave radar, and a radar normal), a relative distance $r$, and a relative speed $v$ of a fence target point at $(x,y)$, which satisfy the following relationship:

$$\begin{cases} \sin\theta = \dfrac{y}{r} \\[2mm] \cos\theta = \dfrac{x}{r} \\[2mm] v = -v_c\sin\theta \end{cases}.$$

FIG. 2 shows a relative angle $\theta_m$, a relative distance $r_m$, and a relative speed $v_m$ of a target point $(x_m,y_m)$, and a relative angle $\theta_n$, a relative distance $r_n$, and a relative speed $v_n$ of a target point $(x_n,y_n)$. The above geometric relationship causes the relative distance and relative speed of the fence measured by the lateral millimeter wave radar to exhibit arc distribution characteristics, as shown in FIG. 4. Detection data may be obtained by analyzing an echo signal(s) of the lateral millimeter wave radar, and further, target points conforming to the arc distribution are found from the detection data and marked as arc target points. In this case, it may be considered that the arc target points belong to the lateral stationary object, and location information of the lateral stationary object may be accurately detected on the basis of the arc target points. This application provides a method for estimating a location of a lateral stationary object through a new signal processing method based on the lateral millimeter wave radar, so as to avoid a problem of a large deviation of lateral stationary object location estimation caused by poor angle measurement performance of the lateral millimeter wave radar. The method satisfies a requirement of the lateral millimeter wave radar for detecting the lateral stationary object, and provides a technical means for determining a movable area by a mobile platform equipped with the lateral millimeter wave radar, thereby improving the accuracy of determining the movable area by the mobile platform and improving the safety of driving.

In some embodiments, the determining of the arc target points conforming to the arc distribution from the detection data includes: determining the arc target points based on a moving speed of the vehicle and the detection data.

In this embodiment, it is specifically defined that the arc target points can be determined based on the moving speed of the vehicle and the detection data. On the one hand, for a mobile platform in a stationary state, the lateral stationary object is harmless, and therefore the application of this solution is of little significance. On the other hand, for a mobile platform in a moving state, the relative speeds between the arc target points and the lateral millimeter wave radar can be greater than zero, which helps determine whether the detection data conforms to the arc distribution.

In some embodiments, the detection data includes reflection intensity, relative distances, and relative speeds, and the determining of the arc target points based on a moving speed of the vehicle and the detection data includes: determining, from the detection data, valid target points whose reflection intensity is greater than a threshold; and determining the arc target points based on the moving speed, and relative distances and relative speeds of the valid target points.

In this embodiment, the detection data and how to determine the arc target points are specifically defined. The detection data includes reflection intensity, relative distances, and relative speeds. First, those target points whose reflection intensity is greater than a threshold are marked as valid target points. This can filter out a false target(s) caused by noise and improve the accuracy of a detection result. Next, based on the moving speed of the mobile platform, whether relative distances and relative speeds of the valid target points conform to the arc distribution is further analyzed, so that the arc target points can be determined. For a millimeter wave radar, its performance in distance measurement and speed measurement is always an important advantage and is less affected by multipath interference. Using this advantage to estimate the location of the lateral stationary object can improve estimation accuracy and obtain a better estimation result in comparison with a conventional method.

In some embodiments, the determining of the arc target points based on the moving speed, and relative distances and relative speeds of the valid target points includes: determining, among the valid target points, screened target points whose relative speeds are less than the moving speed; calculating lateral distances based on the moving speed, and relative distances and the relative speeds of the screened target points; and determining the arc target points based on the lateral distances of the screened target points.

In this embodiment, how to determine the arc target points from the valid target points is further defined. Since the mobile platform is in a moving state and the lateral stationary object is in a stationary state, when the mobile platform is considered as stationary, the lateral stationary object as a whole has a reverse speed equal in value and opposite in direction to the moving speed of the mobile platform. Specifically for one arc target point on the lateral stationary object, a direction of a relative speed of the arc target point should be parallel to a connection line between the arc target point and a center of the mobile platform. Therefore, the relative speed of the arc target point may be regarded as a component of the aforementioned reverse speed on the connection line, that is, the foregoing geometric relationship is satisfied. Therefore, a value of the relative speed should be less than a value of the reverse speed, that is, less than a value of the moving speed of the mobile platform. Accordingly, a target point whose relative speed is greater than or equal to the moving speed among the valid target points may be regarded as a false target caused by noise and may be screened out, and the rest can be used as screened target points. This can improve the accuracy of a detection result. Based on the foregoing geometric relationship, it may be further known that a lateral distance of the arc target point may be regarded as a component of a relative distance of the arc target point in a lateral direction. The geometric relationship associates the moving speed with the relative speed, relative distance, and lateral distance of the arc target point. A lateral distance of a screened target point may be obtained based on the geometric relationship, and the lateral distance further helps determine whether the screened target point is an arc target point. It may be understood that the calculated lateral distances of other screened target points than the arc target points may not be accurate, and features of these other screened target points are different from those of the arc target point either; therefore, these other screened target points may be screened out.

In some embodiments, the determining of the arc target points based on the lateral distances of the screened target points includes: presetting a plurality of continuous reference lateral distance intervals, and associating, based on a case how the lateral distances of the screened target points fall within one of the reference lateral distance intervals, corresponding screened target points with the reference lateral distance interval; counting a quantity of screened target points associated with each reference lateral distance interval, and marking the quantity as a target quantity; and marking, based on a case whether the target quantity is greater than a preset quantity, the corresponding screened target points associated with the reference lateral distance interval as the arc target points.

In this embodiment, how to determine the arc target points based on the calculated lateral distances is specifically defined. What can be first determined is: the lateral distances of arc target points belonging to the same lateral stationary object should be equal theoretically; however, because measurement errors inevitably exist, differences between lateral distances of different arc target points of the same lateral stationary object should be less than a certain range, and differences between lateral distances of different lateral stationary objects should be greater than a certain range. By presetting the plurality of continuous reference lateral distance intervals, an appropriate value range may be provided for the arc target points of the same lateral stationary object, and different lateral stationary objects can also be distinguished, that is, screened target points falling within the same reference lateral distance interval are regarded as belonging to the same object. Further, because the lateral stationary object has a certain volume, the quantity of echo signals reflected by the lateral stationary object should also reach a certain quantity. If this is represented by using lateral distances, it means that the quantity of lateral distances falling within the same reference lateral distance interval should be large enough. By setting a preset quantity, a specific criterion may be provided for this quantity. Only when the quantity of screened target points associated with the reference lateral distance interval is greater than the preset quantity, can the screened target points be considered as the arc target points. This facilitates the operation and can improve detection accuracy.

In some embodiments, the determining of the location information of the lateral stationary object based on the arc target points includes: for each screened target point, calculating a longitudinal distance based on the moving speed, and a relative distance and a relative speed corresponding to the screened target point, and obtaining a lateral distance and a longitudinal distance corresponding to the arc target point as location information corresponding to the arc target point.

In this embodiment, when the lateral distance is calculated for the screened target point, the longitudinal distance may also be calculated, and after the arc target point is determined, the lateral distance and the longitudinal distance of the arc target point can be correspondingly obtained as its location information. In this way, the detection of the lateral stationary object is implemented.

In some embodiments, for each arc target point, a longitudinal distance is calculated based on the moving speed, and a relative distance and a relative speed corresponding to the arc target point, and a lateral distance and the longitudinal distance corresponding to the arc target point are used as location information corresponding to the arc target point.

In this embodiment, alternatively, only a lateral distance may be calculated for a screened target point, and a longitudinal distance is calculated after an arc target point is determined. In this way, the amount of calculation can be reduced.

In some embodiments, a length of each reference lateral distance interval is equal, and is related to accuracy of the lateral millimeter wave radar.

In this embodiment, it is specifically defined that the length of each reference lateral distance interval is equal. In this way, different lateral stationary objects can be evenly divided. In addition, as described above, measurement errors of lateral distances of arc target points belonging to the same lateral stationary object inevitably exist. The smaller the errors, the smaller the differences between the lateral distances of different arc target points of the same lateral stationary object. Accordingly, the length of the reference lateral distance interval may be set as small enough to improve the detection accuracy.

In some embodiments, the length of each reference lateral distance interval is not greater than 0.5 meter.

In this embodiment, it is specifically defined that the length of each reference lateral distance interval is not greater than 0.5 meter, that is, for a same object, a maximum difference between lateral distances of different target points should not be greater than 0.5 meter, so as to ensure that different objects are effectively distinguished, and ensure the detection accuracy.

In some embodiments, the preset quantity is related to the quantity of radar signals transmitted by the lateral millimeter wave radar.

In this embodiment, as described above, the quantity of echo signals reflected by a lateral stationary object should reach a certain quantity, and in terms of lateral distances, it means that the preset quantity should be large enough. However, the echo signals are still limited by the quantity of transmitted radar signals. Thus, associating the preset quantity with the quantity of radar signals transmitted by the lateral millimeter wave radar helps set the preset quantity appropriately, thereby improving the detection accuracy.

In some embodiments, the preset quantity is greater than or equal to 10.

In this embodiment, the preset quantity is set to be greater than or equal to 10, which can adapt to the transmission capability of a common lateral millimeter wave radar and the volume of a common lateral stationary object, and satisfy a detection requirement.

In some embodiments, the radar signals transmitted by the lateral millimeter wave radar are fast swept frequency modulated continuous wave signals.

In this embodiment, it is specifically defined that the radar signals transmitted by the lateral millimeter wave radar are fast swept frequency modulated continuous wave signals. In this way, detection data with higher accuracy can be obtained, which helps improve the detection accuracy.

In some embodiments, the detection data further includes relative angles, and the lateral stationary object detection method based on the lateral millimeter wave radar further includes: marking relative angles and relative distances corresponding to other target points than the arc target point as location information corresponding to the other target points.

In this embodiment, for the other target points than the arc target points, because the other target points do not conform to the arc distribution, it is not appropriate to use the calculated lateral and longitudinal distances as the location information. A conventional angle measurement mode may still be used to obtain the relative angles of the other target points. Then the relative angles are used in combination with relative distances in the detection data as location information. An appropriate detection solution may be selected for different types of objects, and a location of each object around the mobile platform can be detected. In this way, the completeness of the detection is ensured.

The following uses a specific embodiment to describe a lateral stationary object detection method based on a lateral millimeter wave radar according to this application.

Step 1: Process an echo signal received by the lateral millimeter wave radar at a current moment to obtain detection data, select a target point whose reflection intensity is greater than a specified threshold, and obtain a relative distance and a relative speed $(r_i, v_i), i=i1, 2,...,I$ corresponding to the target point.

Step 2: Sequentially traverse all target points obtained in step 1, and perform the following calculation operations on a target point satisfying $v_i < v_c$ :

$$\sin \theta_i = -\frac{v_i}{v_c},$$

$$y_i = r_i \sin \theta_i = -r_i \frac{v_i}{v_c},$$

and

$$x_i = r_i \cos \theta_i = r_i \sqrt{1 - (\sin \theta_i)^2} = r_i \sqrt{1 - \frac{v_i^2}{v_c^2}},$$

where $v_c$ is a moving speed of a vehicle, and is transmitted to the lateral millimeter wave radar through a CAN bus on a vehicle body.

Step 3: Based on an interval Ax, perform statistical distribution of all $x_i$ calculated in step 2, that is, perform divisions based on ($\Delta x, 2\Delta x, 3\Delta x,...,M\Delta x$), and count the quantity of target points falling within a same x interval, and if the target point quantity in an interval is greater than a specified quantity threshold N, mark target points in the interval as arc target points, where for a fence, the target points may also be specifically marked as fence target points. Ax is a value not exceeding 0.5 meter, which specifically depends on the accuracy of distance measurement and speed measurement of the lateral millimeter wave radar used. The higher the accuracy, the smaller $\Delta x$. The specified quantity threshold N is a value greater than or equal to 10 based on an empirical value. Depending on the quantity of target points output by the lateral millimeter wave radar, the more the target points, the larger the specified quantity threshold N.

Step 4: For a target point(s) marked as a fence, a specific location ($x,y$) of the target point has been obtained, and for the remaining target points not marked as the fence, a conventional angle measurement mode may be used to obtain target angle information, thereby obtaining location information.

According to a second aspect of this application, an embodiment provides a moving speed detection method based on a lateral millimeter wave radar, where the lateral millimeter wave radar is mounted on a side of a mobile platform (for example, a vehicle). For the lateral millimeter wave radar, a conventional method for estimating a moving speed of a mobile platform with a front-mounted radar and a rear-mounted radar is no longer applicable, making it difficult to determine a moving state of a lateral object.

The following describes an embodiment of this application in detail by using a vehicle as an example.

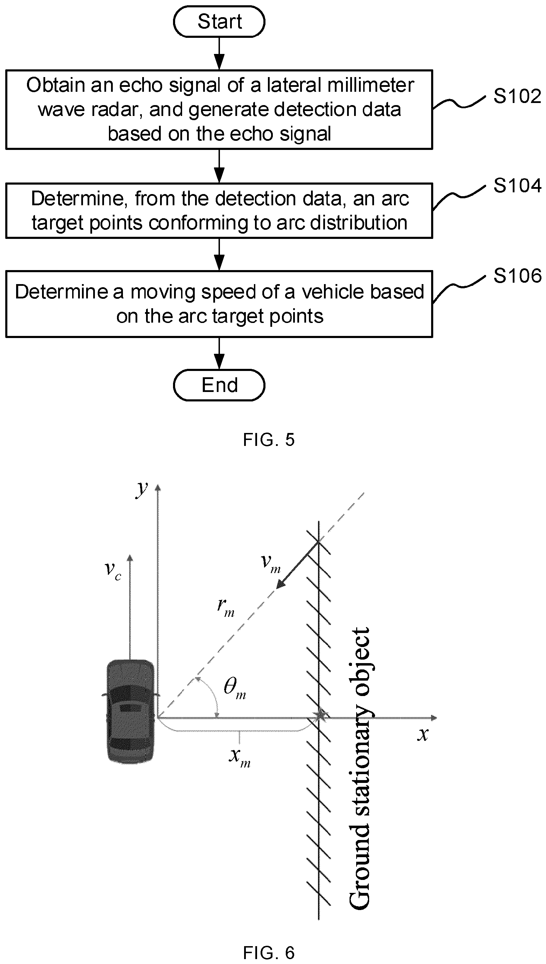

FIG. 5 is a schematic flowchart of a moving speed detection method based on a lateral millimeter wave radar according to an embodiment of this application.

As shown in FIG. 5, the moving speed detection method based on the lateral millimeter wave radar includes the following steps.

S202. Obtain an echo signal of the lateral millimeter wave radar, and generate detection data based on the echo signal.

S204. Determine, from the detection data, arc target points conforming to arc distribution.

S206. Determine a moving speed of a vehicle based on the arc target points.

In the moving speed detection method based on the lateral millimeter wave radar according to this embodiment of this application, a geostationary object (such as a guardrail or a green belt) may be used to calculate the moving speed of the vehicle. Through analysis, it is found that when the lateral millimeter wave radar is used to transmit radar signals, for a stationary object on a lateral side of the vehicle, a schematic diagram of changes of reflection intensity of the stationary object with relative distances and relative speeds is shown in FIG. 4. The relative distances and relative speeds exhibit arc distribution characteristics. The arc herein may include a circular arc, but may also include other non-circular arc shapes. For example, in the case where a lateral stationary object is completely straight, and a vehicle drives along a straight line parallel to the lateral stationary object, and both a mounting error and a detection error of the lateral millimeter wave radar are very small, target points should exhibit a circular arc shape in a distance-speed energy graph. When an environmental condition, a driving condition, or other condition has errors, the target points may exhibit a general arc shape. It can be known from FIG. 4 that a conventional solution to obtaining angle information of a target by using a multichannel angle measurement algorithm and then determining a moving speed of a vehicle is no longer applicable to the lateral millimeter wave radar. In this embodiment of this application, detection data may be obtained by analyzing echo signals of the lateral millimeter wave radar, and then target points conforming to the arc distribution are found and marked as arc target points, and the arc target points are scattering points of the stationary object on the side of the vehicle. Because angles of different arc target points on the same object relative to the vehicle are different, there are differences between relative speeds detected by the lateral millimeter wave radar. The moving speed of the vehicle may be estimated by using the arc target points. In this application, based on a lateral millimeter wave radar mounting solution, the moving speed of the vehicle may be obtained by using a unique feature of the lateral millimeter wave radar and a signal processing mode. This resolves a fault problem caused by an inability to obtain the moving speed of the vehicle by the lateral millimeter wave radar, and avoids a target moving state estimation error caused by the inability to obtain the moving speed of the vehicle, which may otherwise affect a decision and control of the vehicle based on the lateral millimeter wave radar.

In some embodiments, the determining, from the detection data, the arc target points conforming to the arc distribution includes: determining one reference target point and a plurality of calculated target points from the detection data; determining real speeds of the calculated target points based on the reference target point; and determining the arc target points based on the real speeds.

In this embodiment, how to determine the arc target points is specifically defined. A target point that is most likely to be an arc target point is selected from the target points corresponding to the detection data as the reference target point, and the remaining target points are used as the calculated target points. By comparing with the reference target point, whether each calculated target point is an arc target point may be determined. Specifically, because the arc target points are scattering points of a stationary object on a lateral side of the vehicle, the real speeds of these arc target points should all be zero. When the vehicle is considered as stationary, the real speeds of the arc target points should be equal in value and opposite in direction to the moving speed of the vehicle, that is, the real speeds of the arc target points should be equal theoretically. According to this law, real speeds of all calculated target points are first determined based on the reference target point, and then the arc target points may be determined by analyzing the real speeds. This data processing solution may have high accuracy. Subsequently, the calculated real speeds may be used to further determine the moving speed of the vehicle, so as to further improve the detection efficiency.

In some embodiments, the detection data includes relative distances and relative speeds, a relative distance corresponding to the reference target point is less than a relative distance corresponding to any one of the calculated target points, and an absolute value of a relative speed corresponding to the reference target point is less than a preset value.

In this embodiment, the detection data and a selection criterion for the reference target point are specifically defined. The detection data includes relative distances and relative speeds. For the millimeter wave radar, its performance in distance measurement and speed measurement is always an important advantage, and is less affected by multipath interference. Using this advantage to estimate the moving speed can improve detection accuracy and improve target detection performance of the lateral millimeter wave radar. In a driving process of the vehicle, the stationary object on the side usually has a certain length and is approximately parallel to the vehicle. In such a case, an ideal reference target point would be a projection point of a signal transmission point of the lateral millimeter wave radar on the stationary object (a target point in a star position shown in FIG. 5 represents a projection point), where a relative distance of the projection point is equal to a lateral distance between the vehicle and the stationary object, and a relative speed of the projection point is equal to zero, so the projection point can serve as a good reference point. However, it is usually impossible to detect the exact projection point in actual detection. Therefore, a target point with the smallest relative distance and with an absolute value of a relative speed being small enough (less than a preset value, for example, 0.1 m/s) may be used as the reference target point to perform subsequent detection. It should be noted that if the target point with the smallest relative distance does not satisfy that the absolute value of the relative speed is less than the preset value, a distance between the target point and the projection point is considered as long, thus its reference value is not high, which will reduce detection accuracy. In this case, this frame of data may be discarded, and a moving speed of this frame may be estimated based on a moving speed determined by detection data of a previous frame or a next frame, for example, may be determined by using an interpolation algorithm.

In some embodiments, the determining of the real speeds of the calculated target points based on the reference target point includes: determining angular relationships between the reference target point, the calculated target points, and the signal transmission point based on the relative distance corresponding to the reference target point and relative distances corresponding to the calculated target points; and determining the real speeds of the calculated target points based on the angular relationships and relative speeds of the calculated target points, where the relative speeds are components of the real speeds in a forward direction of the vehicle.

In this embodiment, how to determine the real speeds of the calculated target points is specifically defined. As described above, the relative distance of the reference target point may be considered as the lateral distance between the vehicle and the stationary object. Therefore, the angular relationships between the reference target point, the calculated target points, and the signal transmission point may be represented by the relative distances of the reference target point and the calculated target points. Specifically, angles between lines connecting the calculated target points and the signal transmission point and a line connecting the reference target point and the signal transmission point may be obtained. Because the relative speeds of the calculated target points are the components of the real speeds of the calculated target points in the forward direction of the vehicle, directions of the relative speeds are parallel to directions of the lines connecting the calculated target points and the signal transmission point, and the forward direction of the vehicle is perpendicular to the lateral direction (that is, a direction of the line connecting the reference target point and the signal transmission point), the real speeds can be calculated based on the obtained angular relationships and the relative speeds of the calculated target points. Because the millimeter wave radar has an advantage of performance in distance measurement and speed measurement, real speeds of the arc target points obtained based on the relative distances and relative speeds are also accurate, which helps improve the detection accuracy.

Specifically, as shown in FIG. 6, assuming that a speed of an vehicle is $v_c$, a relative speed of a ground stationary object relative to the vehicle in a y direction is $-v_c$. Assuming that an angle between a radar normal and a line connecting the ground stationary object and a signal transmission point of a lateral millimeter wave radar is $\theta_m$, a relative distance is $r_m$, and a relative distance in an x direction is $x_m$, that is, the foregoing lateral distance, which may be represented by a relative distance of a reference target point. The distance and speed measured by the radar are a radial distance and a radial speed, that is, in a transmission direction of the radar electromagnetic wave. Therefore, a relative distance measured by the radar is $r_m$, a relative speed measured by the radar is $v_m$, and the following is satisfied:

$$v_m = -v_c \sin \theta_m .$$

Based on a geometric relationship, the following may be obtained:

$$\cos \theta_m = \frac{x_m}{r_m} .$$

Based on the foregoing two formulas, a real speed $-v_c$ of the ground stationary object may be calculated.

In a scenario of a vehicle-mounted radar, in a driving process, the stationary objects are mainly roadside fences and curbs, and the like, and their lateral distances are generally the same, but longitudinal distances thereof are different. Therefore, the stationary objects exhibit arc distribution as shown in FIG. 4.

In some embodiments, the determining of the arc target points based on the real speeds includes: determining round-down values of the real speeds of all the calculated target points; counting quantities of the round-down values; and marking the calculated target points corresponding to a largest quantity of round-down values as the arc target points.

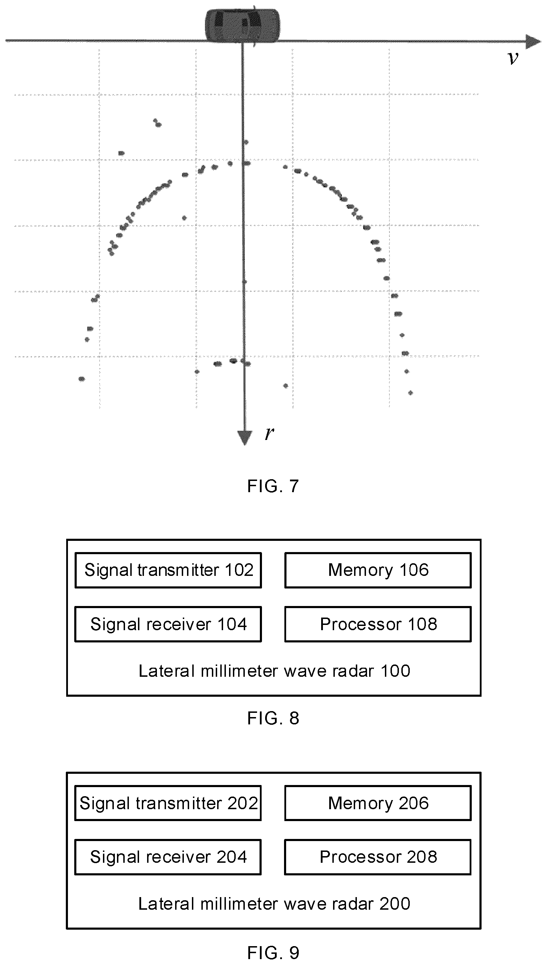

In this embodiment, how to determine the arc target points based on the real speeds is specifically defined. Due to detection errors, there are slight deviations between real speeds of different arc target points. By determining the round-down values of all the real speeds, an integer part of each real speed may be obtained, that is, a decimal part is deemed as a deviation. In this way, the real speeds are simply processed in a unified manner. In this case, a large quantity of equal round-down values may be obtained. In addition, as shown in FIG. 7, for the lateral millimeter wave radar, when the stationary object is an object with a dominant quantity of scattering points and has a special distance-speed distribution characteristic. In other words, most of the target points conform to arc distribution, but noise still exists, significant differences may exist between real speeds of the noise target points and the real speeds of the arc target points. Based on these differences, by means of counting the quantity of the round-down values, it may be considered that the calculated target points corresponding to the largest quantity of round-down values are the arc target points, and calculated target points corresponding to other round-down values are noise. For example, there are 25 calculated target points in total. If among 25 real speeds obtained, 20 of them are 30 km/h and 5 of them are 10 km/h, the calculated target points corresponding to 30 km/h are considered as arc target points.

Further, prior to the determining of the round-down values, the calculated real speeds may be filtered first. For example, a real speed exceeding a speed measurement range of the lateral millimeter wave radar would be filtered out. In this way, noise is reduced, which helps improve detection accuracy. In addition, for the largest quantity of round-down values, a quantity threshold obtained through training may also be introduced to represent a minimum quantity of arc target points. If the largest quantity of round-down values does not exceed the quantity threshold, it may still be considered that the calculated target points corresponding to the round-down values are not arc target points, and will reduce detection accuracy. In this case, this frame of data may be discarded, and a moving speed of this frame may be estimated based on a moving speed determined by detection data of a previous frame or a next frame, for example, may be determined by using an interpolation algorithm.

In some embodiments, the moving speed may be an average of the real speeds of all the arc target points.

In this embodiment, after the arc target points are determined, the corresponding round-down values may not be used directly as the moving speed, rather the real speeds of all the arc target points are averaged, and the moving speed may be obtained based on an actual detection result. This helps improve the detection accuracy.

In some embodiments, the detection data includes reflection intensity, and the determining of the reference target point and the plurality of calculated target points from the detection data includes: determining, from the detection data, valid target points whose reflection intensity is greater than a threshold; and determining the reference target point and the plurality of calculated target points from the valid target points.

In this embodiment, the detection data includes reflection intensity. With reference to FIG. 4, it can be seen that the smaller a relative distance of an arc target point from the vehicle, the higher the reflection intensity of the arc target point, and the reflection intensity of the arc target point is higher than that of a nearby noise target point. Based on this, a threshold of the reflection intensity may be set as a criterion for noise filtering, that is, the reference target point and calculated target points are determined after being screened with a constant false alarm threshold. In this way, a false target caused by noise is filtered out, which helps improve the detection accuracy.

In some embodiments, the radar signals transmitted by the lateral millimeter wave radar are fast swept frequency modulated continuous wave signals.

In this embodiment, it is specifically defined that the radar signals transmitted by the lateral millimeter wave radar are fast swept frequency modulated continuous wave signals. In this way, detection data with higher accuracy can be obtained, which helps improve the detection accuracy.

The following uses a specific embodiment to describe a moving speed detection method based on a lateral millimeter wave radar according to this application.

Step 1: Traverse all target points whose reflection intensity exceed a constant false alarm threshold (an empirical value obtained through training), to search for a reference target point with a shortest relative distance as well as a relative speed of approximately 0, that is, a target point in a star position, as shown in FIG. 6, where a screening condition is ($r_i < r_m$ &|$v_i$| <0.1$m/s$).

Step 2: Perform the following processing on the reference target point ($r_i$,$v_i$) that satisfies the foregoing condition, and a remaining calculated target point $m$($m \neq i$ & $r_m > r_i$):

Step 2-1: Calculate a relative angle of the calculated target point $m$:

$$\cos\theta_m = \frac{r_i}{r_m},$$

$$\sin\theta_m = \sqrt{1-(\cos\theta_m)^2}.$$

Step 2-2: Calculate a real speed of the calculated target point m:

$$v'_m = \left|\frac{v_m}{\sin\theta_m}\right|.$$

Step 2-3: Count target points that satisfy $v'_m < v_{max}$ ($v_{max}$ is a radar speed measurement range) in this frame, and perform the following operations:

$$n = \text{floor}(v'_m),$$

$$\text{cnt}(n) = \text{cnt}(n)+1,$$

$$v'_c(n) = v'_c(n)+v'_m,$$

where floor is a round-down operation, initial values of cnt($n$) and $v'_c$($n$) are both set to 0, cnt($n$) is used to count quantities of different round-down values $n$, and $v'_c$($n$) is used to calculate a sum of all real speeds corresponding to a same round-down value $n$.

Step 2-4: Select the corresponding $n$ when cnt has a maximum value, and if cnt($n$) > $n_{th}$ ($n_{th}$ is a threshold obtained through training), a calculated speed of a vehicle is:

$$v_c = v'_c(n)/\text{cnt}(n).$$

According to a third aspect of this application, an embodiment provides a lateral millimeter wave radar mounted on a lateral side of a vehicle.

FIG. 8 is a schematic structural diagram of the lateral millimeter wave radar according to an embodiment of this application.

As shown in FIG. 8, the lateral millimeter wave radar 100 includes a signal transmitter 102 configured to transmit radar signals, a signal receiver 104 configured to receive echo signals, a memory 106 configured to store a computer instruction(s), and a processor(s) 108, where the processor(s) 108 is configured to execute the computer instruction(s) to implement the following steps: obtaining an echo signal, and generating detection data based on the echo signal; determining, from the detection data, arc target points conforming to arc distribution; and determining location information of a lateral stationary object based on the arc target points.

The lateral millimeter wave radar 100 provided by this embodiment of this application may obtain the detection data by analyzing the echo signals from the lateral millimeter wave radar 100, and further find target points conforming to the arc distribution from the detection data, where the target points are marked as arc target points. In this case, it may be considered that the arc target points belong to the lateral stationary object. The location information of the lateral stationary object can be accurately detected based on the arc target points. This application provides a method for estimating a location of a lateral stationary object through a new signal processing method based on the lateral millimeter wave radar 100, to avoid a problem of a large deviation in lateral stationary object location estimation caused by poor angle measurement performance of the lateral millimeter wave radar. The method satisfies a requirement of the lateral millimeter wave radar 100 for detecting the lateral stationary object, and provides a technical means for determining a movable area by a mobile platform equipped with the lateral millimeter wave radar 100, thereby improving accuracy of determining the movable area by the mobile platform and improving safety of driving.

In some embodiments, the determining, from the detection data, of the arc target points conforming to the arc distribution, which is implemented when the processor 108 executes the computer instruction, includes: determining the arc target points based on a moving speed of the vehicle and the detection data.

In this embodiment, it is specifically defined that the arc target points can be determined based on the moving speed of the vehicle and the detection data. On the one hand, for a mobile platform in a stationary state, the lateral stationary object is harmless, and therefore the application of this solution is of little significance. On the other hand, for a mobile platform in a moving state, the relative speeds of the arc target points and the lateral millimeter wave radar 100 can be greater than zero, which helps determine whether the detection data conforms to the arc distribution.

In some embodiments, the detection data includes reflection intensity, relative distances, and relative speeds, and the determining of the arc target points based on a moving speed of the vehicle and the detection data, which is implemented when the processor 108 executes the computer instruction, includes: determining, from the detection data, valid target points whose reflection intensity is greater than a threshold; and determining the arc target points based on the moving speed, and relative distances and relative speeds of the valid target points.

In this embodiment, the detection data and how to determine the arc target points are specifically defined. The detection data includes reflection intensity, relative distances, and relative speeds. First, those target points whose reflection intensity is greater than a threshold are marked as valid target points. This can filter out a false target(s) caused by noise and improve the accuracy of a detection result. Next, based on the moving speed of the mobile platform, whether relative distances and relative speeds of the valid target points conform to the arc distribution is further analyzed, so that the arc target points can be determined. For a millimeter wave radar, its performance in distance measurement and speed measurement is always an important advantage and is less affected by multipath interference. Using this advantage to estimate the location of the lateral stationary object can improve estimation accuracy and obtain a better estimation result in comparison with a conventional method.

In some embodiments, the determining of the arc target points based on the moving speed, and relative distances and relative speeds of the valid target points, which is implemented when the processor 108 executes the computer instruction, includes: determining, among the valid target points, screened target points whose relative speeds are less than the moving speed; calculating lateral distances based on the moving speed, and relative distances and the relative speeds of the screened target points; and determining the arc target points based on the lateral distances of the screened target points.

In this embodiment, how to determine the arc target points from the valid target points is further defined. Since the mobile platform is in a moving state and the lateral stationary object is in a stationary state, when the mobile platform is considered as stationary, the lateral stationary object as a whole has a reverse speed equal in value and opposite in direction to the moving speed of the mobile platform. Specifically for one arc target point on the lateral stationary object, a direction of a relative speed of the arc target point should be parallel to a connection line between the arc target point and a center of the mobile platform. Therefore, the relative speed of the arc target point may be regarded as a component of the aforementioned reverse speed on the connection line, that is, the foregoing geometric relationship is satisfied. Therefore, a value of the relative speed should be less than a value of the reverse speed, that is, less than a value of the moving speed of the mobile platform. Accordingly, a target point whose relative speed is greater than or equal to the moving speed among the valid target points may be regarded as a false target caused by noise and may be screened out, and the rest can be used as screened target points. This can improve the accuracy of a detection result. Based on the foregoing geometric relationship, it may be further known that a lateral distance of the arc target point may be regarded as a component of a relative distance of the arc target point in a lateral direction. The geometric relationship associates the moving speed with the relative speed, relative distance, and lateral distance of the arc target point. A lateral distance of a screened target point may be obtained based on the geometric relationship, and the lateral distance further helps determine whether the screened target point is an arc target point. It may be understood that the calculated lateral distances of other screened target points than the arc target points may not be accurate, and features of these other screened target points are different from those of the arc target point either; therefore, these other screened target points may be screened out.

In some embodiments, the determining of the arc target points based on the lateral distances of the screened target points, which is implemented when the processor 108 executes the computer instruction, includes: presetting a plurality of continuous reference lateral distance intervals, and associating, based on a case how the lateral distances of the screened target points fall within one of the reference lateral distance intervals, the corresponding screened target points with the reference lateral distance interval; counting a quantity of screened target points associated with each reference lateral distance interval, and marking the quantity as a target quantity; and marking, based on a case whether the target quantity is greater than a preset quantity, the corresponding screened target points associated with the reference lateral distance interval as the arc target points.

In this embodiment, how to determine the arc target points based on the calculated lateral distances is specifically defined. What can be first determined is: lateral distances of arc target points belonging to the same lateral stationary object should be equal theoretically; however, because measurement errors inevitably exist, differences between lateral distances of different arc target points of the same lateral stationary object should be less than a certain range, and differences between lateral distances of different lateral stationary objects should be greater than a certain range. By presetting the plurality of continuous reference lateral distance intervals, an appropriate value range may be provided for the arc target points of the same lateral stationary object, and different lateral stationary objects can also be distinguished, that is, screened target points falling within the same reference lateral distance interval are regarded as belonging to the same object. Further, because the lateral stationary object has a certain volume, the quantity of echo signals reflected by the lateral stationary object should also reach a certain quantity. If the foregoing is represented by using lateral distances, it means that the quantity of lateral distances falling within the same reference lateral distance interval should be large enough. By setting a preset quantity, a specific criterion may be provided for this quantity. Only when the quantity of screened target points associated with the reference lateral distance interval is greater than the preset quantity can the screened target points be considered as the arc target points. This facilitates the operation and can improve the detection accuracy.

In some embodiments, the determining of the location information of the lateral stationary object based on the arc target points, which is implemented when the processor 108 executes the computer instruction, includes: for each screened target point, calculating a longitudinal distance based on the moving speed, and a relative distance and a relative speed corresponding to the screened target point, and obtaining a lateral distance and a longitudinal distance corresponding to the arc target point as location information corresponding to the arc target point.

In this embodiment, when the lateral distance is calculated for the screened target point, the longitudinal distance may also be calculated, and after the arc target point is determined, the lateral distance and the longitudinal distance of the arc target point can be correspondingly obtained as its location information. In this way, the detection of the lateral stationary object is implemented.

In some embodiments, for each arc target point, a longitudinal distance is calculated based on the moving speed, and a relative distance and a relative speed corresponding to the arc target point, and a lateral distance and the longitudinal distance corresponding to the arc target point are used as location information corresponding to the arc target point.

In this embodiment, alternatively, only a lateral distance may be calculated for a screened target point, and a longitudinal distance is calculated after an arc target point is determined. In this way, the amount of calculation can be reduced.

In some embodiments, a length of each reference lateral distance interval is equal, and is related to accuracy of the lateral millimeter wave radar 100.

In this embodiment, it is specifically defined that the length of each reference lateral distance interval is equal. In this way, different lateral stationary objects can be evenly divided. In addition, as described above, measurement errors of lateral distances of arc target points belonging to the same lateral stationary object inevitably exist. The smaller the errors, the smaller the differences between the lateral distances of different arc target points of the same lateral stationary object. Accordingly, the length of the reference lateral distance interval may be set as small enough to improve the detection accuracy.

In some embodiments, the length of each reference lateral distance interval is not greater than 0.5 meter.

In this embodiment, it is specifically defined that the length of each reference lateral distance interval is not greater than 0.5 meter, that is, for a same object, a maximum difference between lateral distances of different target points should not be greater than 0.5 meter, so as to ensure that different objects are effectively distinguished and ensure the detection accuracy.

In some embodiments, the preset quantity is related to the quantity of radar signals transmitted by the lateral millimeter wave radar 100.

In this embodiment, as described above, the quantity of echo signals reflected by a lateral stationary object should reach a certain quantity, and in terms of lateral distances, it means that the preset quantity should be large enough. However, the echo signals are still limited by the quantity of transmitted radar signals. Thus, associating the preset quantity with the quantity of radar signals transmitted by the lateral millimeter wave radar 100 helps set the preset quantity appropriately, thereby improving the detection accuracy.

In some embodiments, the preset quantity is greater than or equal to 10.

In this embodiment, the preset quantity is set to be greater than or equal to 10, which can adapt to the transmission capability of a common lateral millimeter wave radar and the volume of a common lateral stationary object and satisfy a detection requi rement.

In some embodiments, the radar signals transmitted by the lateral millimeter wave radar 100 are fast swept frequency modulated continuous wave signals.

In this embodiment, it is specifically defined that the radar signals transmitted by the lateral millimeter wave radar 100 are fast swept frequency modulated continuous wave signals. In this way, detection data with higher accuracy can be obtained, which helps improve the detection accuracy.

In some embodiments, the detection data further includes relative angles, and when the processor 108 executes the computer instruction, the following is further implemented: marking relative angles and relative distances corresponding to other target points than the arc target point as location information corresponding to the other target points.

In this embodiment, for the other target points than the arc target points, because the other target points do not conform to the arc distribution, it is not appropriate to use the calculated lateral and longitudinal distances as the location information. A conventional angle measurement mode may still be used to obtain the relative angles of the other target points. Then the relative angles are used in combination with relative distances in the detection data as location information. An appropriate detection solution may be selected for different types of objects, and a location of each object around the mobile platform can be detected. In this way, the completeness of the detection is ensured.

According to a fourth aspect of this application, an embodiment provides a lateral millimeter wave radar mounted on a side of a vehicle.

FIG. 9 is a schematic structural diagram of the lateral millimeter wave radar according to another embodiment of this application.

As shown in FIG. 9, the lateral millimeter wave radar 200 includes a signal transmitter 202 configured to transmit radar signals, a signal receiver 204 configured to receive echo signals, a memory 206 configured to store a computer instruction(s), and a processor 208, where the processor 208 is configured to execute the computer instruction(s) to implement the following: obtaining an echo signal, and generating detection data based on the echo signal; determining, from the detection data, arc target points conforming to arc distribution; and determining a moving speed of the vehicle based on the arc target points.

The lateral millimeter wave radar 200 provided by this embodiment of this application may use a geostationary object (such as a guardrail or a green belt) to calculate the moving speed of the vehicle. Through analysis, it is found that when the lateral millimeter wave radar 200 is used to transmit radar signals, relative distances and relative speeds of a stationary object on a lateral side of the vehicle exhibit arc distribution characteristics. In this embodiment of this application, the detection data may be obtained by analyzing the echo signals of the lateral millimeter wave radar 200, and then target points conforming to the arc distribution are found and marked as arc target points, and the arc target points are scattering points of the stationary object on the lateral side of the vehicle. Because angles of different arc target points on the same object relative to the vehicle may be different, there are differences between relative speeds detected by the lateral millimeter wave radar 200. The moving speed of the vehicle may be estimated based on the arc target points. In this application, based on a lateral millimeter wave radar mounting solution, the moving speed of the vehicle may be obtained based on a unique feature of the lateral millimeter wave radar and a signal processing mode. This resolves a fault problem caused by an inability to obtain the moving speed of the vehicle by the lateral millimeter wave radar, and avoids a target moving state estimation error caused by the inability to obtain the moving speed of the vehicle, which may otherwise affect a decision and control of the vehicle based on the lateral millimeter wave radar.

In some embodiments, the determining, from the detection data, of the arc target points conforming to arc distribution, which is implemented when the processor 208 executes the computer instruction, includes: determining one reference target point and a plurality of calculated target points from the detection data; determining real speeds of the calculated target points based on the reference target point; and determining the arc target points based on the real speeds.

In this embodiment, how to determine the arc target points is specifically defined. A target point that is most likely to be an arc target point is selected from the target points corresponding to the detection data as the reference target point, and the remaining target points are used as the calculated target points. By comparing with the reference target point, whether each calculated target point is an arc target point may be determined. Specifically, because the arc target points are scattering points of a stationary object on a lateral side of the vehicle, the real speeds of these arc target points should all be zero. When the vehicle is considered as stationary, the real speeds of the arc target points should be equal in value and opposite in direction to the moving speed of the vehicle, that is, the real speeds of the arc target points should be equal theoretically. According to this law, real speeds of all calculated target points are first determined based on the reference target point, and then the arc target points may be determined by analyzing the real speeds. This data processing solution may have high accuracy. Subsequently, the calculated real speeds may be used to further determine the moving speed of the vehicle, so as to further improve the detection efficiency.

In some embodiments, the detection data includes relative distances and relative speeds, a relative distance corresponding to the reference target point is less than a relative distance corresponding to any one of the calculated target points, and an absolute value of a relative speed corresponding to the reference target point is less than a preset value.

In this embodiment, the detection data and a selection criterion for the reference target point are specifically defined. The detection data includes relative distances and relative speeds. For the millimeter wave radar, its performance in distance measurement and speed measurement is always an important advantage and is less affected by multipath interference. Using this advantage to estimate the moving speed can improve detection accuracy and improve target detection performance of the lateral millimeter wave radar 200. In a driving process of the vehicle, the stationary object on the side usually has a certain length and is approximately parallel to the vehicle. In such as case, an ideal reference target point would be a projection point of a signal transmission point of the lateral millimeter wave radar 200 on the stationary object (a target point in a star position shown in FIG. 5 represents a projection point), where a relative distance of the projection point is equal to a lateral distance between the vehicle and the stationary object, and a relative speed of the projection point is equal to zero, so the projection point can serve as a good reference point. However, it is usually impossible to detect the projection point in actual detection. Therefore, a target point with the smallest relative distance and with an absolute value of a relative speed being small enough (less than a preset value, for example, 0.1 m/s) may be used as the reference target point to perform subsequent detection. It should be noted that if the target point with the smallest relative distance does not satisfy that the absolute value of the relative speed is less than the preset value, a distance between the target point and the projection point is considered as long, thus its reference value is not high, which will reduce detection accuracy. In this case, this frame of data may be discarded, and a moving speed of this frame may be estimated based on a moving speed determined by detection data of a previous frame or a next frame, for example, may be determined by using an interpolation algorithm.

In some embodiments, the determining of the real speeds of the calculated target points based on the reference target point, which is implemented when the processor 208 executes the computer instruction, includes: determining angular relationships between the reference target point, the calculated target points, and the signal transmission point based on the relative distance corresponding to the reference target point and relative distances corresponding to the calculated target points; and determining the real speeds of the calculated target points based on the angular relationships and relative speeds of the calculated target points, where the relative speeds are components of the real speeds in a forward direction of the vehicle.

In this embodiment, how to determine the real speeds of the calculated target points is specifically defined. As described above, the relative distance of the reference target point may be considered as the lateral distance between the vehicle and the stationary object. Therefore, the angular relationships between the reference target point, the calculated target points, and the signal transmission point may be represented by using the relative distances of the reference target point and the calculated target points. Specifically, angles between lines connecting the calculated target points and the signal transmission point and a line connecting the reference target point and the signal transmission point may be obtained. Because the relative speeds of the calculated target points are the components of the real speeds of the calculated target points in the forward direction of the vehicle, directions of the relative speeds are parallel to directions of the lines connecting the calculated target points and the signal transmission point, and the forward direction of the vehicle is perpendicular to the lateral direction (that is, a direction of the line connecting the reference target point and the signal transmission point), the real speeds can be calculated based on the foregoing obtained angular relationships and the relative speeds of the calculated target points. Because the millimeter wave radar has an advantage of performance in distance measurement and speed measurement, real speeds of the arc target points obtained based on the relative distances and relative speeds are also accurate, which helps improve the detection accuracy.

In some embodiments, the determining of the arc target points based on the real speeds, which is implemented when the processor 208 executes the computer instruction, includes: determining round-down values of the real speeds of all the calculated target points; counting quantities of the round-down values; and marking the calculated target points corresponding to a largest quantity of round-down values as the arc target points.

In this embodiment, how to determine the arc target points based on the real speeds is specifically defined. Due to detection errors, there are slight deviations between real speeds of different arc target points. By determining the round-down values of all the real speeds, an integer part of each real speed may be obtained, that is, a decimal part is deemed as a deviation. In this way, the real speeds are simply processed in a unified manner. In this case, a large quantity of equal round-down values may be obtained. In addition, as shown in FIG. 7, for the lateral millimeter wave radar, when the stationary object is an object with a dominant quantity of scattering points and has a special distance-speed distribution characteristic. In other words, most of the target points conform to arc distribution, but noise still exists, and significant differences may exist between real speeds of the noise target points and the real speeds of the arc target points. Based on these differences, by means of counting the quantity of the round-down values, it may be considered that the calculated target points corresponding to the largest quantity of round-down values are the arc target points, and calculated target points corresponding to other round-down values are noise.

In some embodiments, the moving speed may be an average of the real speeds of all the arc target points.

In this embodiment, after the arc target points are determined, the corresponding round-down values may not be used directly as the moving speed, rather the real speeds of all the arc target points are averaged, and the moving speed may be obtained based on an actual detection result. This helps improve the detection accuracy.

In some embodiments, the detection data includes reflection intensity, and the determining of the reference target point and the plurality of calculated target points from the detection data, which is implemented when the processor 208 executes the computer instruction, includes: determining, from the detection data, valid target points whose reflection intensity is greater than a threshold; and determining the reference target point and the plurality of calculated target points from the valid target points.

In this embodiment, the detection data includes reflection intensity. With reference to FIG. 4, it can be seen that the smaller a relative distance of an arc target point from the vehicle, the higher the reflection intensity of the arc target point, and the reflection intensity of the arc target point is higher than that of a nearby noise target point. Based on this, a threshold of the reflection intensity may be set as a criterion for noise filtering, that is, the reference target point and calculated target points are determined after being screened with a constant false alarm threshold. In this way, a false target caused by noise is filtered out, which helps improve the detection accuracy.

In some embodiments, the radar signals transmitted by the lateral millimeter wave radar 200 are fast swept frequency modulated continuous wave signals.

In this embodiment, it is specifically defined that the radar signals transmitted by the lateral millimeter wave radar 200 are fast swept frequency modulated continuous wave signals. In this way, detection data with higher accuracy can be obtained, which helps improve the detection accuracy.

According to a fifth aspect of this application, an embodiment provides a mobile platform.

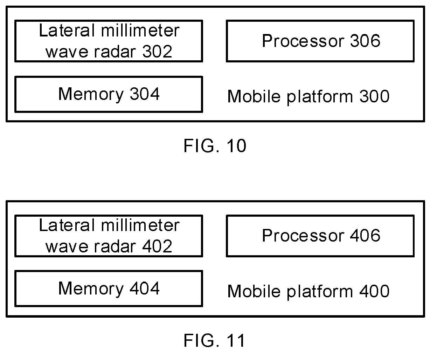

FIG. 10 is a schematic structural diagram of a mobile platform according to an embodiment of this application.

As shown in FIG. 10, the mobile platform 300 includes a lateral millimeter wave radar 302 configured to transmit a radar signal(s) and receive an echo signal(s), a memory 304 configured to store a computer instruction(s), and a processor 306, where the processor 306 is configured to execute the computer instruction(s) to implement the following: obtaining the echo signal(s), and generating detection data based on the echo signal(s); determining, from the detection data, arc target points conforming to arc distribution; and determining location information of a lateral stationary object based on the arc target points. It may be understood that the lateral millimeter wave radar 302, the memory 304, and the processor 306 in this embodiment of this application may be one device disposed on the mobile platform 300, such as a millimeter wave radar device having a data processing function; or may be a plurality of devices disposed on the mobile platform 300, such as a millimeter wave radar that only transmits and receives radar signals and a central computing platform of the mobile platform 300. In this case, the lateral millimeter wave radar 302, the memory 304, and the processor 306 may perform data transmission on the mobile platform 300 through a data bus, or may perform data transmission in other wired or wireless modes. This is not limited herein.

The mobile platform 300 provided by this embodiment of this application may obtain the detection data by analyzing the echo signal(s) of the lateral millimeter wave radar 302, and further find target points conforming to the arc distribution from the detection data, where the target points are marked as arc target points. In this case, it may be considered that the arc target points belong to the lateral stationary object. The location information of the lateral stationary object can be accurately detected based on the arc target points. This application provides a method for estimating a location of a lateral stationary object through a new signal processing method based on the lateral millimeter wave radar 302, so as to avoid a problem of a large deviation in lateral stationary object location estimation caused by poor angle measurement performance of the lateral millimeter wave radar. The method satisfies a requirement of the lateral millimeter wave radar 302 for detecting the lateral stationary object, and provides a technical means for determining a movable area by the mobile platform 300 equipped with the lateral millimeter wave radar 302, thereby improving the accuracy of determining the movable area by the mobile platform 300 and improving the safety of driving.

In some embodiments, the determining, from the detection data, of the arc target points conforming to the arc distribution, which is implemented when the processor 306 executes the computer instruction, includes: determining the arc target points based on a moving speed of the mobile platform 300 and the detection data.

In this embodiment, it is specifically defined that the arc target points can be determined based on the moving speed of the mobile platform 300 and the detection data. On the one hand, for the mobile platform 300 in a stationary state, the lateral stationary object is harmless, and therefore the application of this solution is of little significance. On the other hand, for a mobile platform in a moving state, the relative speeds between the arc target points and the lateral millimeter wave radar 302 can be greater than zero, which helps determine whether the detection data conforms to the arc distribution.

In some embodiments, the detection data includes reflection intensity, relative distances, and relative speeds, and the determining of the arc target points based on a moving speed of the mobile platform 300 and the detection data, which is implemented when the processor 306 executes the computer instruction, includes: determining, from the detection data, valid target points whose reflection intensity is greater than a threshold; and determining the arc target points based on the moving speed, and relative distances and relative speeds of the valid target points.

In this embodiment, the detection data and how to determine the arc target points are specifically defined. The detection data includes reflection intensity, relative distances, and relative speeds. First, those target points whose reflection intensity is greater than the threshold are marked as valid target points. This can filter out a false target(s) caused by noise and improve the accuracy of a detection result. Next, based on the moving speed of the mobile platform 300, whether relative distances and relative speeds of the valid target points conform to the arc distribution is further analyzed, so that the arc target points can be determined. For a millimeter wave radar, its performance in distance measurement and speed measurement is always an important advantage and is less affected by multipath interference. Using this advantage to estimate the location of the lateral stationary object can improve estimation accuracy and obtain a better estimation result in comparison with a conventional method.

In some embodiments, the determining of the arc target points based on the moving speed, and relative distances and relative speeds of the valid target points, which is implemented when the processor 306 executes the computer instruction, includes: determining, among the valid target points, screened target points whose relative speeds are less than the moving speed; calculating lateral distances based on the moving speed, and relative distances and the relative speeds of the screened target points; and determining the arc target points based on the lateral distances of the screened target points.

In this embodiment, how to determine the arc target points from the valid target points is further defined. Since the mobile platform 300 is in the moving state and the lateral stationary object is in the stationary state, when the mobile platform 300 is considered as stationary, the lateral stationary object as a whole has a reverse speed equal in value and opposite in direction to the moving speed of the mobile platform 300. Specifically for one arc target point on the lateral stationary object, a direction of a relative speed of the arc target point should be parallel to a connection line between the arc target point and a center of the mobile platform 300. Therefore, the relative speed of the arc target point may be regarded as a component of the aforementioned reverse speed on the connection line, that is, the foregoing geometric relationship is satisfied. Therefore, a value of the relative speed should be less than a value of the reverse speed, that is, less than a value of the moving speed of the mobile platform 300. Accordingly, a target point whose relative speed is greater than or equal to the moving speed among the valid target points may be regarded as a false target caused by noise and may be screened out, and the rest can be used as screened target points. This can improve the accuracy of a detection result. Based on the foregoing geometric relationship, it may be further known that a lateral distance of the arc target point may be regarded as a component of a relative distance of the arc target point in a lateral direction. The geometric relationship associates the moving speed with the relative speed, relative distance, and lateral distance of the arc target point. A lateral distance of a screened target point may be obtained based on the geometric relationship, and the lateral distance further helps determine whether the screened target point is an arc target point. It may be understood that the calculated lateral distances of other screened target points than the arc target points may not be accurate, and features of these other screened target points are different from those of the arc target point either; therefore, these other screened target points may be screened out.

In some embodiments, the determining of the arc target points based on the lateral distances of the screened target points, which is implemented when the processor 306 executes the computer instruction, includes: presetting a plurality of continuous reference lateral distance intervals, and associating, based on a case how the lateral distances of the screened target points fall within one of the reference lateral distance intervals, corresponding screened target points with the reference lateral distance interval; counting a quantity of screened target points associated with each reference lateral distance interval, and marking the quantity as a target quantity; and marking, based on a case whether the target quantity is greater than a preset quantity, the corresponding screened target points associated with the reference lateral distance interval as the arc target points.

In this embodiment, how to determine the arc target points based on the calculated lateral distances is specifically defined. What can be first determined is: lateral distances of arc target points belonging to the same lateral stationary object should be equal theoretically; however, because measurement errors inevitably exist, differences between lateral distances of different arc target points of the same lateral stationary object should be less than a certain range, and differences between lateral distances of different lateral stationary objects should be greater than a certain range. By presetting the plurality of continuous reference lateral distance intervals, an appropriate value range may be provided for the arc target points of the same lateral stationary object, and different lateral stationary objects can also be distinguished, that is, screened target points falling within the same reference lateral distance interval are regarded as belonging to the same object. Further, because the lateral stationary object has a certain volume, the quantity of echo signals reflected by the lateral stationary object should also reach a certain quantity. If the foregoing is represented by using lateral distances, it means that the quantity of lateral distances falling within the same reference lateral distance interval should be large enough. By setting a preset quantity, a specific criterion may be provided for this quantity. Only when the quantity of screened target points associated with the reference lateral distance interval is greater than the preset quantity can the screened target points be considered as the arc target points. This facilitates the operation and can improve the detection accuracy.

In some embodiments, the determining of the location information of the lateral stationary object based on the arc target points, which is implemented when the processor 306 executes the computer instruction, includes: for each screened target point, calculating a longitudinal distance based on the moving speed, and a relative distance and a relative speed corresponding to the screened target point, and obtaining a lateral distance and a longitudinal distance corresponding to the arc target point as location information corresponding to the arc target point.

In this embodiment, when the lateral distance is calculated for the screened target point, the longitudinal distance may also be calculated, and after the arc target point is determined, the lateral distance and the longitudinal distance of the arc target point can be correspondingly obtained as its location information. In this way, the detection of the lateral stationary object is implemented.

In some embodiments, for each arc target point, a longitudinal distance is calculated based on the moving speed, and a relative distance and a relative speed corresponding to the arc target point, and a lateral distance and the longitudinal distance corresponding to the arc target point are used as location information corresponding to the arc target point.

In this embodiment, alternatively, only a lateral distance may be calculated for a screened target point, and a longitudinal distance is calculated after an arc target point is determined. In this way, the amount of calculation can be reduced.

In some embodiments, a length of each reference lateral distance interval is equal, and is related to accuracy of the lateral millimeter wave radar 302.

In this embodiment, it is specifically defined that the length of each reference lateral distance interval is equal. In this way, different lateral stationary objects can be evenly divided. In addition, as described above, measurement errors of lateral distances of arc target points belonging to the same lateral stationary object inevitably exist. The smaller errors, the smaller the differences between the lateral distances of different arc target points of the same lateral stationary object. Accordingly, the length of the reference lateral distance interval may be set as small enough to improve the detection accuracy.

In some embodiments, the length of each reference lateral distance interval is not greater than 0.5 meter.

In this embodiment, it is specifically defined that the length of each reference lateral distance interval is not greater than 0.5 meter, that is, for a same object, a maximum difference between lateral distances of different target points should not be greater than 0.5 meter, so as to ensure that different objects are effectively distinguished and ensure the detection accuracy.

In some embodiments, the preset quantity is related to the quantity of radar signals transmitted by the lateral millimeter wave radar 302.

In this embodiment, as described above, the quantity of echo signals reflected by a lateral stationary object should reach a certain quantity, and in terms of lateral distances, it means that the preset quantity should be large enough. However, the echo signals are still limited by the quantity of transmitted radar signals. Thus, associating the preset quantity with the quantity of radar signals transmitted by the lateral millimeter wave radar 302 helps set the preset quantity appropriately, thereby improving the detection accuracy.

In some embodiments, the preset quantity is greater than or equal to 10.

In this embodiment, the preset quantity is set to be greater than or equal to 10, which can adapt to the transmission capability of a common lateral millimeter wave radar and the volume of a common lateral stationary object and satisfy a detection requirement.

In some embodiments, the radar signals transmitted by the lateral millimeter wave radar 302 are fast swept frequency modulated continuous wave signals.

In this embodiment, it is specifically defined that the radar signals transmitted by the lateral millimeter wave radar 302 are fast swept frequency modulated continuous wave signals. In this way, detection data with higher accuracy can be obtained, which helps improve detection accuracy.

In some embodiments, the detection data further includes relative angles, and when the processor 306 executes the computer instruction, the following is further implemented: marking relative angles and relative distances corresponding to other target points than the arc target point as location information corresponding to the other target points.

In this embodiment, for the other target points than the arc target points, because the other target points do not conform to the arc distribution, it is not appropriate to use the calculated lateral and longitudinal distances as the location information. A conventional angle measurement mode may still be used to obtain the relative angles of the other target points. Then the relative angles are used in combination with relative distances in the detection data as location information. An appropriate detection solution may be selected for different types of objects, and a location of each object around the mobile platform 300 can be detected. In this way, the completeness of the detection is ensured.

According to a sixth aspect of this application, an embodiment provides a mobile platform.

FIG. 11 is a schematic structural diagram of the mobile platform according to another embodiment of this application.

As shown in FIG. 11, the mobile platform 400 includes a lateral millimeter wave radar 402 configured to transmit a radar signal(s) and receive an echo signal(s), a memory **404** configured to store a computer instruction(s), and a processor 406, where the processor 406 is configured to execute the computer instruction to implement the following: obtaining the echo signal(s), and generating detection data based on the echo signal(s); determining, from the detection data, arc target points conforming to arc distribution; and determining a moving speed of the mobile platform 400 based on the arc target points. It may be understood that the lateral millimeter wave radar 402, the memory 404, and the processor 406 in this embodiment of this application may be one device disposed on the mobile platform 400, such as a millimeter wave radar device having a data processing function; or may be a plurality of devices disposed on the mobile platform 400, such as a millimeter wave radar that only transmits and receives radar signals and a central computing platform of the mobile platform 400. In this case, the lateral millimeter wave radar 402, the memory 404, and the processor 406 may perform data transmission on the mobile platform 400 through a data bus, or may perform data transmission in other wired or wireless modes. This is not limited herein.

The mobile platform 400 provided by this embodiment of this application may use a geostationary object to calculate the moving speed of the mobile platform 400. Through analysis, it is found that when the lateral millimeter wave radar 402 is used to transmit radar signals, relative distances and relative speeds of a stationary object on a lateral side of the mobile platform 400 exhibit arc distribution characteristics. In this embodiment of this application, the detection data may be obtained by analyzing the echo signals of the lateral millimeter wave radar 402, and then target points conforming to the arc distribution are found and marked as arc target points, and the arc target points are scattering points of the stationary object on the lateral side of the mobile platform 400. Because angles of different arc target points on the same object relative to the mobile platform 400 may be different, there are differences between relative speeds detected by the lateral millimeter wave radar 402. The moving speed of the mobile platform 400 may be estimated based on the arc target points. In this application, based on a lateral millimeter wave radar mounting solution, the moving speed of the mobile platform 400 may be obtained based on a unique feature of the lateral millimeter wave radar and a signal processing mode. This resolves a fault problem caused by an inability to obtain the moving speed of the mobile platform by the lateral millimeter wave radar, and avoids a target moving state estimation error caused by the inability to obtain the moving speed of the mobile platform, which may otherwise affect a decision and control of the mobile platform based on the lateral millimeter wave radar.

In some embodiments, the determining, from the detection data, of the arc target points conforming to arc distribution, which is implemented when the processor 406 executes the computer instruction, includes: determining one reference target point and a plurality of calculated target points from the detection data; determining real speeds of the calculated target points based on the reference target point; and determining the arc target points based on the real speeds.

In this embodiment, how to determine the arc target points is specifically defined. A target point that is most likely to be an arc target point is selected from the target points corresponding to the detection data as the reference target point, and the remaining target points are used as the calculated target points. By comparing with the reference target point, whether each calculated target point is an arc target point may be determined. Specifically, because the arc target points are scattering points of a stationary object on a lateral side of the mobile platform 400, the real speeds of these arc target points should all be zero. When the mobile platform 400 is considered as stationary, the real speeds of the arc target points should be equal in value and opposite in direction to the moving speed of the mobile platform 400, that is, the real speeds of the arc target points should be equal theoretically. According to this law, real speeds of all calculated target points are first determined based on the reference target point, and then the arc target points may be determined by analyzing the real speeds. This data processing solution may have high accuracy. Subsequently, the calculated real speeds may be used to further determine the moving speed of the mobile platform 400, so as to further improve the detection efficiency.

In some embodiments, the detection data includes relative distances and relative speeds, a relative distance corresponding to the reference target point is less than a relative distance corresponding to any one of the calculated target points, and an absolute value of a relative speed corresponding to the reference target point is less than a preset value.

In this embodiment, the detection data and a selection criterion for the reference target point are specifically defined. The detection data includes relative distances and relative speeds. For the millimeter wave radar, its performance in distance measurement and speed measurement is always an important advantage and is less affected by multipath interference. Using this advantage to estimate the moving speed can improve detection accuracy and improve target detection performance of the lateral millimeter wave radar 402. In a driving process of the mobile platform 400, the stationary object on the side usually has a certain length and is approximately parallel to the mobile platform 400. In such a case, an ideal reference target point would be a projection point of a signal transmission point of the lateral millimeter wave radar 402 on the stationary object (a target point in a star position shown in FIG. 5 represents a projection point), where a relative distance of the projection point is equal to a lateral distance between the mobile platform 400 and the stationary object, and a relative speed of the projection point is equal to zero, so the projection point can serve as a good reference point. However, it is usually impossible to detect the projection point in actual detection. Therefore, a target point with the smallest relative distance and with an absolute value of a relative speed being small enough (less than a preset value, for example, 0.1 m/s) may be used as the reference target point to perform subsequent detection. It should be noted that if the target point with the smallest relative distance does not satisfy that the absolute value of the relative speed is less than the preset value, a distance between the target point and the projection point is considered as long, thus its reference value is not high, which will reduce detection accuracy. In this case, this frame of data may be discarded, and a moving speed of this frame may be estimated based on a moving speed determined by detection data of a previous frame or a next frame, for example, may be determined by using an interpolation algorithm.

In some embodiments, the determining of the real speeds of the calculated target points based on the reference target point, which is implemented when the processor 406 executes the computer instruction, includes: determining angular relationships between the reference target point, the calculated target points, and the signal transmission point based on the relative distance corresponding to the reference target point and relative distances corresponding to the calculated target points; and determining the real speeds of the calculated target points based on the angular relationships and relative speeds of the calculated target points, where the relative speeds are components of the real speeds in a forward direction of the mobile platform 400.

In this embodiment, how to determine the real speeds of the calculated target points is specifically defined. As described above, the relative distance of the reference target point may be considered as the lateral distance between the mobile platform 400 and the stationary object. Therefore, the angular relationships between the reference target point, the calculated target points, and the signal transmission point may be represented by using the relative distances of the reference target point and the calculated target points. Specifically, angles between lines connecting the calculated target points and the signal transmission point and a line connecting the reference target point and the signal transmission point may be obtained. Because the relative speeds of the calculated target points are the components of the real speeds of the calculated target points in the forward direction of the mobile platform 400, directions of the relative speeds are parallel to directions of the lines connecting the calculated target points and the signal transmission point, and the forward direction of the mobile platform 400 is perpendicular to the lateral direction (that is, a direction of the line connecting the reference target point and the signal transmission point), the real speeds can be calculated based on the foregoing obtained angular relationships and the relative speeds of the calculated target points. Because the millimeter wave radar has an advantage of performance in distance measurement and speed measurement, real speeds of the arc target points obtained based on the relative distances and relative speeds are also accurate, which helps improve the detection accuracy.

In some embodiments, the determining of the arc target points based on the real speeds, which is implemented when the processor 406 executes the computer instruction, includes: determining round-down values of the real speeds of all the calculated target points; counting quantities of the round-down values; and marking the calculated target points corresponding to a largest quantity of round-down values as the arc target points.

In this embodiment, how to determine the arc target points based on the real speeds is specifically defined. Due to detection errors, there are slight deviations between real speeds of different arc target points. By determining the round-down values of all the real speeds, an integer part of each real speed may be obtained, that is, a decimal part is deemed as a deviation. In this way, the real speeds are simply processed in a unified manner. In this case, a large quantity of equal round-down values may be obtained. In addition, as shown in FIG. 7, for the lateral millimeter wave radar, when the stationary object is an object with a dominant quantity of scattering points and has a special distance-speed distribution characteristic. In other words, most of the target points conform to arc distribution, but noise still exists, and significant differences may exist between real speeds of the noise target points and the real speeds of the arc target points. Based on the differences, by means of counting the quantity of the round-down values, it may be considered that the calculated target points corresponding to the largest quantity of round-down values are the arc target points, and calculated target points corresponding to other round-down values are noise.

In some embodiments, the moving speed may be an average of the real speeds of all the arc target points.

In this embodiment, after the arc target points are determined, the corresponding round-down values may not be used directly as the moving speed, rather the real speeds of all the arc target points are averaged, and the moving speed may be obtained based on an actual detection result. This helps improve the detection accuracy.

In some embodiments, the detection data includes reflection intensity, and the determining of the reference target point and the plurality of calculated target points from the detection data, which is implemented when the processor 406 executes the computer instruction, includes: determining, from the detection data, valid target points whose reflection intensity is greater than a threshold; and determining the one reference target point and the plurality of calculated target points from the valid target points.

In this embodiment, the detection data includes reflection intensity. With reference to FIG. 4, it can be seen that the smaller a relative distance of an arc target point from the mobile platform 400, the higher the reflection intensity of the arc target point, and the reflection intensity of the arc target point is higher than that of a nearby noise target point. Based on this, a threshold of the reflection intensity may be set as a criterion for noise filtering, that is, the reference target point and calculated target points are determined after being screened with a constant false alarm threshold. In this way, a false target caused by noise is filtered out, which helps improve the detection accuracy.

In some embodiments, the radar signals transmitted by the lateral millimeter wave radar 402 are fast swept frequency modulated continuous wave signals.

In this embodiment, it is specifically defined that the radar signals transmitted by the lateral millimeter wave radar 402 are fast swept frequency **modulated continuous wave signals. In this way, detection data** with higher accuracy can be obtained, which helps improve detection accuracy.

Specifically, the memory in the third aspect to the sixth aspect may include a large-capacity memory for data or instructions. As an example instead of a limitation, the memory may include a hard disk drive (HDD), a floppy disk drive, a flash memory, an optical disc, a magneto-optical disc, a magnetic tape, or a universal serial bus (USB) drive, or a combination of two or more thereof. In an appropriate case, the memory may include a removable or non-removable (or fixed) medium. In an appropriate case, the memory may be inside or outside an integrated gateway redundancy device. In a particular embodiment, the memory is a non-volatile solid state memory. In a particular embodiment, the memory includes a read-only memory (ROM). In an appropriate case, the ROM may be a mask-programmed ROM, a programmable ROM (PROM), an erasable PROM (EPROM), an electrically erasable PROM (EEPROM), an electrically alterable ROM (EAROM), a flash memory, or a combination of two or more thereof.

The processor in the third aspect to the sixth aspect may include a central processing unit (CPU) or an application-specific integrated circuit (ASIC), or may be configured as one or more integrated circuits for implementing an embodiment of this application.

According to a seventh aspect of this application, an embodiment provides a computer-readable storage medium, where the computer-readable storage medium stores a computer program, and when the computer program is executed by a processor, steps of the lateral stationary object detection method based on the lateral millimeter wave radar according to any one of the foregoing embodiments are implemented, or steps of the moving speed detection method based on the lateral millimeter wave radar according to any one of the foregoing embodiments are implemented. Therefore the computer-readable storage medium has beneficial effects of the lateral stationary object detection method based on the lateral millimeter wave radar and the moving speed detection method based on the lateral millimeter wave radar. Details are not repeated herein.

Specifically, the computer-readable storage medium may include any medium capable of storing or transmitting information. Examples of the computer-readable storage medium include an electronic circuit, a semiconductor memory device, a ROM, a flash memory, an erasable ROM (EROM), a floppy disk, a CD-ROM, an optical disc, a hard disk, an optical fiber medium, a radio frequency (RF) link, and the like. A code segment may be downloaded by using a computer network such as the Internet or an intranet.

In this application, the term "plurality" indicates two or more, unless otherwise expressly defined. The terms "mounted", "connected", "connection", "fixed", and the like should be understood in a broad sense. For example, "connection" may be a fixed connection, a detachable connection, or an integrated connection; and "connected" may be "directly connected" or may be "indirectly connected" via an intermediate medium. A person of ordinary skill in the art would understand specific meanings of these terms in this application based on specific situations.

In the description of this specification, the description of the terms "an embodiment", "some embodiments", "specific embodiments", and the like means that specific features, structures, materials, or characteristics described with reference to the embodiment(s) or example(s) are included in at least one embodiment or example of this application. In this specification, a schematic representation of the foregoing terms does not necessarily refer to a same embodiment or a same example. In addition, the described specific features, structures, materials, or characteristics may be combined in one or more embodiments or examples in an appropriate manner.

The foregoing descriptions are only preferred embodiments of this application, and not intended to limit this application. For a person skilled in the art, this application may have various changes and variations. Any modifications, equivalent replacements, improvements, and the like made within the spirit and principle of this application shall fall within the scope of protection of this application.

## Claims

1. A lateral stationary object detection method based on a lateral millimeter wave radar, wherein the lateral millimeter wave radar is mounted on a lateral side of a mobile platform, and the lateral stationary object detection method based on the lateral millimeter wave radar comprising:

   obtaining an echo signal of the lateral millimeter wave radar, and generating detection data based on the echo signal;
   determining, from the detection data, arc target points conforming to an arc distribution; and
   determining location information of a lateral stationary object based on the arc target points.

2. The lateral stationary object detection method based on the lateral millimeter wave radar according to claim 1, wherein the determining, from the detection data, of the arc target points conforming to the arc distribution includes:
   determining the arc target points based on a moving speed of the mobile platform and the detection data.

3. The lateral stationary object detection method based on the lateral millimeter wave radar according to claim 2, wherein the detection data includes reflection intensity, relative distances and relative speeds, and the determining of the arc target points based on the moving speed of the mobile platform and the detection data includes:

   determining, from the detection data, valid target points whose reflection intensity is greater than a threshold; and
   determining the arc target points based on the moving speed, and relative distances and relative speeds of the valid target points.

4. The lateral stationary object detection method based on the lateral millimeter wave radar according to claim 3, wherein the determining of the arc target points based on the moving speed, and the relative distances and the relative speeds of the valid target points includes:

   determining, from the valid target points, screened target points whose relative speeds are less than the moving speed;
   calculating lateral distances based on the moving speed, and relative distances and relative speeds of the screened target points; and
   determining the arc target points based on the lateral distances of the screened target points.

5. The lateral stationary object detection method based on the lateral millimeter wave radar according to claim 4, wherein the determining of the arc target points based on the lateral distances of the screened target points includes:

   presetting a plurality of continuous reference lateral distance intervals, and associating, based on how the lateral distances of the screened target points fall within one of the reference lateral distance intervals, corresponding screened target points with the one of the reference lateral distance intervals;
   counting a quantity of screened target points associated with each reference lateral distance interval, and marking the quantity as a target quantity; and
   marking, based on whether the target quantity is greater than a preset quantity, the corresponding screened target points associated with the one of the reference lateral distance intervals as the arc target points.

6. The lateral stationary object detection method based on the lateral millimeter wave radar according to claim 5, wherein the determining of the location information of the lateral stationary object based on the arc target points includes:

   for each screened target point, calculating a longitudinal distance based on the moving speed, and a relative distance and a relative speed corresponding to the screened target point, and obtaining a lateral distance and a longitudinal distance corresponding to one of the arc target points as location information corresponding to the one of the arc target points; or
   for each arc target point, calculating a longitudinal distance based on the moving speed, and a relative distance and a relative speed corresponding to the arc target point, and using a lateral distance and the longitudinal distance corresponding to the arc target point as location information corresponding to the arc target point.

**7.** The lateral stationary object detection method based on the lateral millimeter wave radar according to claim 5, wherein a length of each reference lateral distance interval is equal, and is related to accuracy of the lateral millimeter wave radar.

**8.** The lateral stationary object detection method based on the lateral millimeter wave radar according to claim 7, wherein the length of each reference lateral distance interval is not greater than 0.5 meter.

**9.** The lateral stationary object detection method based on the lateral millimeter wave radar according to claim 5, wherein the preset quantity is related to a quantity of radar signals transmitted by the lateral millimeter wave radar.

**10.** The lateral stationary object detection method based on the lateral millimeter wave radar according to claim 9, wherein the preset quantity is greater than or equal to 10.

**11.** The lateral stationary object detection method based on the lateral millimeter wave radar according to any one of claims 1 to 10, wherein (the) radar signals transmitted by the lateral millimeter wave radar are fast swept frequency modulated continuous wave signals.

**12.** The lateral stationary object detection method based on the lateral millimeter wave radar according to any one of claims 3 to 10, wherein the detection data further includes relative angles, and the lateral stationary object detection method based on the lateral millimeter wave radar further comprises:
marking relative angles and relative distances corresponding to other target points than the arc target points as location information corresponding to the other target points.

**13.** A moving speed detection method based on a lateral millimeter wave radar, wherein the lateral millimeter wave radar is mounted on a lateral side of a mobile platform, and the moving speed detection method based on the lateral millimeter wave radar comprising:

obtaining an echo signal of the lateral millimeter wave radar, and generating detection data based on the echo signal;
determining, from the detection data, arc target points conforming to an arc distribution; and
determining a moving speed of the mobile platform based on the arc target points.

**14.** The moving speed detection method based on the lateral millimeter wave radar according to claim 13, wherein the determining, from the detection data, of the arc target points conforming to the arc distribution includes:

determining a reference target point and a plurality of calculated target points from the detection data;
determining real speeds of the plurality of calculated target points based on the reference target point; and
determining the arc target points based on the real speeds.

**15.** The moving speed detection method based on the lateral millimeter wave radar according to claim 14, wherein the detection data includes relative distances and relative speeds, a relative distance corresponding to the reference target point is less than a relative distance corresponding to any one of the calculated target points, and an absolute value of a relative speed corresponding to the reference target point is less than a preset value.

**16.** The moving speed detection method based on the lateral millimeter wave radar according to claim 15, wherein the determining of the real speeds of the calculated target points based on the reference target point includes:

determining angular relationships between the reference target point, the plurality of calculated target points, and a signal transmission point based on the relative distance corresponding to the reference target point and relative distances corresponding to the plurality of calculated target points; and
determining the real speeds of the plurality of calculated target points based on the angular relationships and relative speeds of the plurality of calculated target points, wherein the relative speeds are components of the real speeds in a forward direction of the mobile platform.

**17.** The moving speed detection method based on the lateral millimeter wave radar according to any one of claims 14 to 16, wherein the determining of the arc target points based on the real speeds includes:

determining round-down values of the real speeds of the plurality of the calculated target points;
counting quantities of the round-down values; and
marking the calculated target points corresponding to a largest quantity of the round-down values as the arc target points.

**18.** The moving speed detection method based on the lateral millimeter wave radar according to any one of claims 14 to 16, wherein the moving speed is an average of the real speeds of the arc target points.

19. The moving speed detection method based on the lateral millimeter wave radar according to any one of claims 14 to 16, wherein the detection data includes reflection intensity, and the determining of the reference target point and the plurality of calculated target points in the detection data includes:

determining, from the detection data, valid target points whose reflection intensity is greater than a threshold; and
determining the reference target point and the plurality of calculated target points from the valid target points.

20. A lateral millimeter wave radar, for being mounted on a side of a mobile platform, wherein the lateral millimeter wave radar comprises:

a signal transmitter, configured to transmit a radar signal;
a signal receiver, configured to receive an echo signal;
a memory, configured to store a computer instruction; and
a processor, configured to execute the computer instruction to implement the following:

obtaining the echo signal, and generating detection data based on the echo signal;
determining, from the detection data, arc target points conforming to an arc distribution; and
determining location information of a lateral stationary object based on the arc target points.

21. The lateral millimeter wave radar according to claim 20, wherein the determining, from the detection data, of the arc target points conforming to the arc distribution, which is implemented when the processor executes the computer instruction, includes:
determining the arc target points based on a moving speed of the mobile platform and the detection data.

22. The lateral millimeter wave radar according to claim 21, wherein the detection data includes reflection intensity, relative distances and relative speeds, and the determining of the arc target points based on the moving speed of the mobile platform and the detection data, which is implemented when the processor executes the computer instruction, includes:

determining, from the detection data, valid target points whose reflection intensity is greater than a threshold; and

determining the arc target points based on the moving speed, and relative distances and relative speeds of the valid target points.

23. The lateral millimeter wave radar according to claim 22, wherein the determining of the arc target points based on the moving speed, and the relative distances and the relative speeds of the valid target points, which is implemented when the processor executes the computer instruction, includes:

determining, from the valid target points, screened target points whose relative speeds are less than the moving speed;
calculating lateral distances based on the moving speed, and relative distances and relative speeds of the screened target points; and
determining the arc target points based on the lateral distances of the screened target points.

24. The lateral millimeter wave radar according to claim 23, wherein the determining of the arc target points based on the lateral distances of the screened target points, which is implemented when the processor executes the computer instruction, includes:

presetting a plurality of continuous reference lateral distance intervals, and associating, based on how the lateral distances of the screened target points fall within one of the reference lateral distance intervals, the corresponding screened target points with the one of the reference lateral distance intervals;
counting a quantity of screened target points associated with each reference lateral distance interval, and marking the quantity as a target quantity; and
marking, based on whether the target quantity is greater than a preset quantity, the corresponding screened target points associated with the one of the reference lateral distance intervals as the arc target points.

25. The lateral millimeter wave radar according to claim 24, wherein the determining of the location information of the lateral stationary object based on the arc target points, which is implemented when the processor executes the computer instruction, includes:

for each screened target point, calculating a longitudinal distance based on the moving speed, and a relative distance and a relative speed corresponding to the screened target point, and obtaining a lateral distance and a longitudinal distance corresponding to one of the arc target points as location information corresponding to the one of the arc target point; or
for each arc target point, calculating a longitudinal distance based on the moving speed, and a relative distance and a relative speed corresponding to the arc target point, and using a lateral distance and the longitudinal distance corresponding to the arc target point as location information corresponding to the arc target point.

26. The lateral millimeter wave radar according to claim 24, wherein a length of each reference lateral distance interval is equal, and is related to accuracy of the lateral millimeter wave radar.

27. The lateral millimeter wave radar according to claim 26, wherein the length of each reference lateral distance interval is not greater than 0.5 meter.

28. The lateral millimeter wave radar according to claim 24, wherein the preset quantity is related to a quantity of radar signals transmitted by the lateral millimeter wave radar.

29. The lateral millimeter wave radar according to claim 28, wherein the preset quantity is greater than or equal to 10.

30. The lateral millimeter wave radar according to any one of claims 20 to 29, wherein (the) radar signals transmitted by the lateral millimeter wave radar are fast swept frequency modulated continuous wave signals.

31. The lateral millimeter wave radar according to any one of claims 22 to 29, wherein the detection data further includes relative angles, and when the processor executes the computer instruction, the following is further implemented:
marking relative angles and relative distances corresponding to other target points than the arc target points as location information corresponding to the other target points.

32. A lateral millimeter wave radar, for being mounted on a lateral side of a mobile platform, wherein the lateral millimeter wave radar comprises:

    a signal transmitter, configured to transmit a radar signal;
    a signal receiver, configured to receive an echo signal;
    a memory, configured to store a computer instruction; and
    a processor, configured to execute the computer instruction to implement the following:

        obtaining the echo signal, and generating detection data based on the echo signal;
        determining, from the detection data, arc target points conforming to an arc distribution; and
determining a moving speed of the mobile platform based on the arc target points.

33. The lateral millimeter wave radar according to claim 32, wherein the determining, from the detection data, of the arc target points conforming to the arc distribution, which is implemented when the processor executes the computer instruction, includes:

    determining a reference target point and a plurality of calculated target points from the detection data;
    determining real speeds of the plurality of calculated target points based on the reference target point; and
    determining the arc target points based on the real speeds.

34. The lateral millimeter wave radar according to claim 33, wherein the detection data includes relative distances and relative speeds, a relative distance corresponding to the reference target point is less than a relative distance corresponding to any one of the calculated target points, and an absolute value of a relative speed corresponding to the reference target point is less than a preset value.

35. The lateral millimeter wave radar according to claim 34, wherein the determining of the real speeds of the calculated target points based on the reference target point, which is implemented when the processor executes the computer instruction, includes:

    determining angular relationships between the reference target point, the plurality of calculated target points, and a signal transmission point based on the relative distance corresponding to the reference target point and relative distances corresponding to the plurality of calculated target points; and
    determining the real speeds of the plurality of calculated target points based on the angular relationships and relative speeds of the plurality of calculated target points, wherein the relative speeds are components of the real speeds in a forward direction of the mobile platform.

36. The lateral millimeter wave radar according to any one of claims 33 to 35, wherein the determining of the arc target points based on the real speeds, which is implemented when the processor executes the computer instruction, includes:

    determining round-down values of the real speeds of the plurality of calculated target points;

counting quantities of the round-down values; and

marking the calculated target points corresponding to a largest quantity of round-down values as the arc target points.

37. The lateral millimeter wave radar according to any one of claims 33 to 35, wherein the moving speed is an average of the real speeds of the arc target points.

38. The lateral millimeter wave radar according to any one of claims 33 to 35, wherein the detection data includes reflection intensity, and the determining of the reference target point and the plurality of calculated target points in the detection data, which is implemented when the processor executes the computer instruction, includes:

determining, from the detection data, valid target points whose reflection intensity is greater than a threshold; and
determining the reference target point and the plurality of calculated target points from the valid target points.

39. A mobile platform, wherein the mobile platform comprises:

a lateral millimeter wave radar, configured to transmit a radar signal and receive an echo signal;
a memory, configured to store a computer instruction; and
a processor, configured to execute the computer instruction to implement the following:

obtaining the echo signal, and generating detection data based on the echo signal;
determining, from the detection data, arc target points conforming to an arc distribution; and
determining location information of a lateral stationary object based on the arc target points.

40. The mobile platform according to claim 39, wherein the determining, from the detection data, of the arc target points conforming to the arc distribution, which is implemented when the processor executes the computer instruction, includes:
determining the arc target points based on a moving speed of the mobile platform and the detection data.

41. The mobile platform according to claim 40, wherein the detection data includes reflection intensity, relative distances and relative speeds, and the determining of the arc target points based on the moving speed of the mobile platform and the detection data, which is implemented when the processor executes the computer instruction, includes:

determining, from the detection data, valid target points whose reflection intensity is greater than a threshold; and
determining the arc target points based on the moving speed, and relative distances and relative speeds of the valid target points.

42. The mobile platform according to claim 41, wherein the determining of the arc target points based on the moving speed, and the relative distances and relative speeds of the valid target points, which is implemented when the processor executes the computer instruction, includes:

determining, from the valid target points, screened target points whose relative speeds are less than the moving speed;
calculating lateral distances based on the moving speed, and relative distances and the relative speeds of the screened target points; and
determining the arc target points based on the lateral distances of the screened target points.

43. The mobile platform according to claim 42, wherein the determining of the arc target points based on the lateral distances of the screened target points, which is implemented when the processor executes the computer instruction, includes:

presetting a plurality of continuous reference lateral distance intervals, and associating, based on how the lateral distances of the screened target points fall within one of the reference lateral distance intervals, the corresponding screened target points with the one of the reference lateral distance intervals;
counting a quantity of screened target points associated with each reference lateral distance interval, and marking the quantity as a target quantity; and
marking, based on whether the target quantity is greater than a preset quantity, the corresponding screened target points associated with the one of the reference lateral distance intervals as the arc target points.

44. The mobile platform according to claim 43, wherein the determining of the location information of the lateral stationary object based on the arc target points, which is implemented when the processor executes the computer instruction, includes:

for each screened target point, calculating a longitudinal distance based on the moving speed, and a relative distance and a relative speed corresponding to the screened target point, and obtaining a lateral distance and a longitudinal distance corresponding to one of the arc target point as location information corresponding to the one of the arc target point; or

for each arc target point, calculating a longitudinal distance based on the moving speed, and a relative distance and a relative speed corresponding to the arc target point, and using a lateral distance and the longitudinal distance corresponding to the arc target point as location information corresponding to the arc target point.

45. The mobile platform according to claim 43, wherein a length of each reference lateral distance interval is equal, and is related to accuracy of the lateral millimeter wave radar.

46. The mobile platform according to claim 45, wherein the length of each reference lateral distance interval is not greater than 0.5 meter.

47. The mobile platform according to claim 43, wherein the preset quantity is related to a quantity of radar signals transmitted by the lateral millimeter wave radar.

48. The mobile platform according to claim 47, wherein the preset quantity is greater than or equal to 10.

49. The mobile platform according to any one of claims 39 to 48, wherein (the) radar signals transmitted by the lateral millimeter wave radar are fast swept frequency modulated continuous wave signals.

50. The mobile platform according to any one of claims 39 to 48, wherein the detection data further includes relative angles, and when the processor executes the computer instruction, the following is further implemented:

marking relative angles and relative distances corresponding to other target points than the arc target points as location information corresponding to the other target points.

51. A mobile platform, wherein the mobile platform comprises:

a lateral millimeter wave radar, configured to transmit a radar signal and receive an echo signal;
a memory, configured to store a computer instruction; and
a processor, configured to execute the computer instruction to implement the following:

obtaining the echo signal, and generating detection data based on the echo signal;
determining, from the detection data, arc target points conforming to an arc distribution; and
determining a moving speed of the mobile platform based on the arc target points.

52. The mobile platform according to claim 51, wherein the determining, from the detection data, of the arc target points conforming to the arc distribution, which is implemented when the processor executes the computer instruction, includes:

determining a reference target point and a plurality of calculated target points from the detection data;
determining real speeds of the plurality of calculated target points based on the reference target point; and
determining the arc target points based on the real speeds.

53. The mobile platform according to claim 52, wherein the detection data includes relative distances and relative speeds, a relative distance corresponding to the reference target point is less than a relative distance corresponding to any one of the calculated target points, and an absolute value of a relative speed corresponding to the reference target point is less than a preset value.

54. The mobile platform according to claim 53, wherein the determining of the real speeds of the calculated target points based on the reference target point, which is implemented when the processor executes the computer instruction, includes:

determining angular relationships between the reference target point, the plurality of calculated target points, and a signal transmission point based on the relative distance corresponding to the reference target point and relative distances corresponding to the plurality of calculated target points; and
determining the real speeds of the plurality of calculated target points based on the angular relationships and relative speeds of the plurality of calculated target points, wherein the relative speeds are components of the real speeds in a forward direction of the mobile platform.

55. The mobile platform according to any one of claims 52 to 54, wherein the determining of the arc target points based on the real speeds, which is implemented when the processor executes the computer instruction, includes:

determining round-down values of the real speeds of the plurality of calculated target points;

counting quantities of the round-down values; and

marking the calculated target points corresponding to a largest quantity of round-down values as the arc target points.

56. The mobile platform according to any one of claims 52 to 54, wherein the moving speed is an average of the real speeds of the arc target points.

57. The mobile platform according to any one of claims 52 to 54, wherein the detection data includes reflection intensity, and the determining of the reference target point and the plurality of calculated target points in the detection data, which is implemented when the processor executes the computer instruction, includes:

determining, from the detection data, valid target points whose reflection intensity is greater than a threshold; and

determining the reference target point and the plurality of calculated target points from the valid target points.

58. A computer-readable storage medium, wherein the computer-readable storage medium stores a computer program, and when the computer program is executed by a processor, steps of the lateral stationary object detection method based on the lateral millimeter wave radar according to any one of claims 1 to 12 are implemented, or steps of the moving speed detection method based on the lateral millimeter wave radar according to any one of claims 13 to 19 are implemented.

Start

Obtain an echo signal of a lateral millimeter wave radar, and generate detection data based on the echo signal ⟩ S102

Determine, from the detection data, arc target points conforming to an arc distribution ⟩ S104

Determine location information of a lateral stationary object based on the arc target points ⟩ S106

End

FIG. 1

FIG. 2

FIG. 3

FIG. 4

Start

Obtain an echo signal of a lateral millimeter wave radar, and generate detection data based on the echo signal — S102

Determine, from the detection data, an arc target points conforming to arc distribution — S104

Determine a moving speed of a vehicle based on the arc target points — S106

End

FIG. 5

FIG. 6

FIG. 7

| Signal transmitter 102 | Memory 106 |
|---|---|
| Signal receiver 104 | Processor 108 |

Lateral millimeter wave radar 100

FIG. 8

| Signal transmitter 202 | Memory 206 |
|---|---|
| Signal receiver 204 | Processor 208 |

Lateral millimeter wave radar 200

FIG. 9

| Lateral millimeter wave radar 302 | Processor 306 |
| Memory 304 | Mobile platform 300 |

FIG. 10

| Lateral millimeter wave radar 402 | Processor 406 |
| Memory 404 | Mobile platform 400 |

FIG. 11

## INTERNATIONAL SEARCH REPORT

| | International application No. |
|---|---|
| | **PCT/CN2019/094663** |

### A. CLASSIFICATION OF SUBJECT MATTER

G01S 13/52(2006.01)i

According to International Patent Classification (IPC) or to both national classification and IPC

### B. FIELDS SEARCHED

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT; CNKI; WPI; EPODOC: 侧向, 侧方, 侧边, 侧面, 毫米波, 雷达, 静止, 物体, 检测, 探测, 弧形, 圆弧, 回波, lateral, millimeter wave, MMW, radar, side w radar, still, stationary, object?, detect+, arc?, echo

### C. DOCUMENTS CONSIDERED TO BE RELEVANT

| Category* | Citation of document, with indication, where appropriate, of the relevant passages | Relevant to claim No. |
|---|---|---|
| A | JP 2010043960 A (NISSAN MOTOR CO., LTD.) 25 February 2010 (2010-02-25) description, paragraphs [0004], and [0009]-[0033], abstract, and figures 1-3 | 1-58 |
| A | CN 106199573 A (WUHU SENSOR TECHNOLOGY CO., LTD.) 07 December 2016 (2016-12-07) entire document | 1-58 |
| A | CN 102862521 A (LIU, Zhaoxuan) 09 January 2013 (2013-01-09) entire document | 1-58 |
| A | CN 1259675 A (EATON VORADO TECHNOLOGY CO., LTD.) 12 July 2000 (2000-07-12) entire document | 1-58 |
| A | CN 105564307 A (SAIC MOTOR CORPORATION LIMITED) 11 May 2016 (2016-05-11) entire document | 1-58 |
| A | CN 102879773 A (CHERY AUTOMOBILE CO., LTD.) 16 January 2013 (2013-01-16) entire document | 1-58 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 March 2020** | **03 April 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/094663**

| Patent document cited in search report | | | Publication date (day/month/year) | Patent family member(s) | | | Publication date (day/month/year) |
|---|---|---|---|---|---|---|---|
| JP | 2010043960 | A | 25 February 2010 | None | | | |
| CN | 106199573 | A | 07 December 2016 | CN | 106199573 | B | 18 October 2019 |
| CN | 102862521 | A | 09 January 2013 | None | | | |
| CN | 1259675 | A | 12 July 2000 | JP | 2000046942 | A | 18 February 2000 |
| | | | | BR | 9903338 | A | 08 March 2000 |
| | | | | AU | 751079 | B2 | 08 August 2002 |
| | | | | DE | 69925203 | D1 | 16 June 2005 |
| | | | | CA | 2276975 | C | 22 March 2005 |
| | | | | EP | 0974851 | A2 | 26 January 2000 |
| | | | | ES | 2243033 | T3 | 16 November 2005 |
| | | | | CA | 2276975 | A1 | 23 January 2000 |
| | | | | AU | 3906199 | A | 17 February 2000 |
| | | | | AT | 295546 | T | 15 May 2005 |
| | | | | DE | 69925203 | T2 | 09 March 2006 |
| | | | | US | 6127965 | A | 03 October 2000 |
| | | | | KR | 100674733 | B1 | 25 January 2007 |
| | | | | KR | 20000011892 | A | 25 February 2000 |
| | | | | EP | 0974851 | B1 | 11 May 2005 |
| | | | | CN | 1242274 | C | 15 February 2006 |
| CN | 105564307 | A | 11 May 2016 | CN | 105564307 | B | 14 November 2017 |
| CN | 102879773 | A | 16 January 2013 | CN | 102879773 | B | 02 July 2014 |

Form PCT/ISA/210 (patent family annex) (January 2015)